# EUROPEAN PATENT SPECIFICATION

(11) **EP 4 318 661 B1**
(45) Date of publication and mention of the grant of the patent: **25.11.2026**
(21) Application number: 22775828.1
(22) Date of filing: 25.03.2022
(51) Int. Cl.: H01M 4/505, H01M 4/525, H01M 10/052, H01M 10/0567, H01M 10/0568, H01M 10/0569, H01M 10/0525, H01M 10/42

(54) **NON-AQUEOUS ELECTROLYTE AND NON-AQUEOUS ELECTROLYTE BATTERY USING SAME**
NICHTWÄSSRIGER ELEKTROLYT UND BATTERIE MIT NICHTWÄSSRIGEM ELEKTROLYT DAMIT
ÉLECTROLYTE NON AQUEUX ET BATTERIE À ÉLECTROLYTE NON AQUEUX L'UTILISANT

(30) Priority: 26.03.2021 JP 2021054147
(43) Date of publication of application: 07.02.2024
(73) Proprietor: MU Ionic Solutions Corporation, Tokyo 100-8251 (JP)
(72) Inventor: FUKAMIZU, Koji, Tokyo 100-8251 (JP); MIYOSHI, Kazuhiro, Tokyo 100-8251 (JP)
(74) Representative: Hoffmann Eitle
(86) International application number: PCT/JP2022/014422
(87) International publication number: WO 2022/203047

(56) References cited:
- EP-A1- 3 171 445
- EP-A1- 3 731 328
- WO-A1-2014/133107
- WO-A1-2016/009994
- WO-A1-2017/061464
- WO-A1-2019/150896
- US-A1- 2015 364 794
- US-A1- 2018 301 758

## Description

### Technical Field

The present invention relates to a nonaqueous electrolytic solution and a nonaqueous electrolytic solution battery using the same.

### Background Art

Nonaqueous electrolytic solution batteries, such as lithium ion secondary batteries are being put into practical use in a wide range of applications from so-called consumer power sources, such as mobile phones and laptop computers to vehicle-mounted power sources for driving automobiles and the like. However, in recent years, demands for higher performance of nonaqueous electrolytic solution batteries have been increasing, and in particular, demands for higher capacities and improvements in various battery characteristics, such as low-temperature use properties, high-temperature storage properties, cycle properties, and safety during overcharge have been increasing.

As techniques for improving the high-temperature storage properties and the cycle properties of nonaqueous electrolytic solution secondary batteries, many techniques have been studied on active materials of positive electrodes and negative electrodes and various components of batteries including nonaqueous electrolytic solution.

PTL 1 discloses a nonaqueous electrolytic solution containing specific amounts of vinylene carbonate and 2-propynyl methyl carbonate as a nonaqueous electrolytic solution for producing a lithium secondary battery having excellent cycle properties.

PTL 2 discloses a nonaqueous electrolytic solution containing a specific diisocyanato compound and further containing a specific amount of at least one selected from a specific phosphate compound, a cyclic sulfonate compound, an isocyanato compound, and a triple bond-containing compound as a nonaqueous electrolytic solution capable of improving electrochemical characteristics at high temperature and reducing not only a discharge capacity retention rate after a high-temperature cycle test but also an increase rate of an electrode thickness.

### Citation List

### Patent Literature

| | |
|---|---|
| PTL 1: | JP 2013-101959 A |
| PTL 2: | WO 2017/061464 (corresponding to US 2018/301758 A1) |

### Summary of Invention

### Technical Problem

However, in recent years, there has been an increasing demand for higher performance of batteries, and it is required to achieve high capacity, high-temperature storage properties, and cycle properties at a high level.

As a method for increasing the capacities of nonaqueous electrolytic solution batteries, packing as much electrode active material as possible in limited volumes of batteries has been studied. For example, a method in which an active material layer of an electrode is compressed to increase the density, and a design in which the volume occupied by components other than the active material inside the battery (for example, the amount of an electrolytic solution) is reduced as much as possible, are performed. However, there is also a problem in that the internal pressure of the battery significantly increases when even a small amount of gas is generated due to the decomposition of the electrolytic solution due to a decrease in voids inside the battery with an increase in capacity.

In particular, in most cases where nonaqueous electrolytic solution secondary batteries are used as backup power sources at the time of power failure or power sources for portable devices, a weak current is constantly supplied to compensate for self-discharge of the batteries, and the batteries are constantly in a charging state. In such a continuously charging state, since the activity of the electrode active material is always high, a decrease in the capacity of the battery is accelerated due to heat generation of the device, and the electrolytic solution is easily decomposed to generate a gas. In a general battery, when the internal pressure is abnormally increased due to an abnormality, such as overcharge, this is sensed to operate the current cut-off valve. However, when a large amount of gas is generated in a continuous charging state, the current cut-off valve which should be operated at the time of the abnormality, such as overcharge malfunctions, and the battery cannot be used in some cases. In order to reduce the malfunction of the current cut-off valve, it is necessary to increase the pressure difference between the internal pressure increased at the time of the abnormality, such as overcharge and the internal pressure increased in the continuous charging state.

In addition, when the capacity of the battery is increased, the gap between the positive electrode and the negative electrode through which lithium ions flow is narrowed, and thus there is a problem in that the resistance is increased and the discharge power capacity is decreased.

Therefore, an object of the present invention is to provide a nonaqueous electrolytic solution capable of suppressing malfunction of a current cut-off valve in a normal use state of a nonaqueous electrolytic solution battery and improving a discharge power capacity, and a nonaqueous electrolytic solution battery using the nonaqueous electrolytic solution.

### Solution to Problem

In view of the above circumstances, the present inventors have conducted intensive studies and, as a result, have found that the above problems can be solved by incorporating a compound having a specific terminal alkyne skeleton and a specific anion into a nonaqueous electrolytic solution in a specific mass ratio, thereby completing the present invention.

That is, the present invention provides a nonaqueous electrolytic solution and a nonaqueous electrolytic solution battery as defined in the appended claims.

### Advantageous Effects of Invention

According to the present invention, it is possible to provide a nonaqueous electrolytic solution capable of suppressing malfunction of a current cut-off valve in a normal use state of a nonaqueous electrolytic solution battery and improving a discharge power capacity, and a nonaqueous electrolytic solution battery using the nonaqueous electrolytic solution.

### Description of Embodiments

### [1. Nonaqueous Electrolytic Solution]

The nonaqueous electrolytic solution of the present invention is a nonaqueous electrolytic solution for a nonaqueous electrolytic solution battery containing an electrolyte and a nonaqueous solvent, and is characterized by containing a compound (A) represented by the following general formula (1) and an anion (B) represented by the following general formula (2), in which a mass ratio [(A)/(B)] of a content of the compound (A) to a content of the anion (B) is 0.01 or more and 1.2 or less: 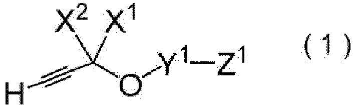 in which X¹ and X² each independently represent a hydrogen atom or an aliphatic hydrocarbon group having 1 or more and 3 or less carbon atoms which may be substituted with a halogen atom; Y¹ is a divalent atomic group selected from the structure group represented by the following formula (1-1); and Z¹ represents an alkyl group having 1 or more and 5 or less carbon atoms, an alkenyl group having 2 or more and 5 or less carbon atoms, or a monovalent substituent represented by the following formula (1-3): 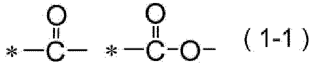 in which * represents a bonding site to an oxygen atom in the formula (1): 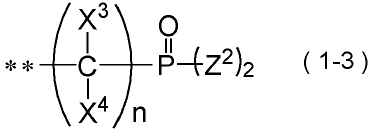 in which Z² represents an alkyl group or an alkoxy group each having 1 or more and 3 or less carbon atoms which may be substituted with a halogen atom, or an alkoxyalkyl group having 2 or more and 4 or less carbon atoms which may be substituted with a halogen atom; X³ and X⁴ each independently represent a hydrogen atom or a halogen atom; n represents an integer of 1 or more and 5 or less; and ** represents a bonding site to Y¹ in the formula (1): 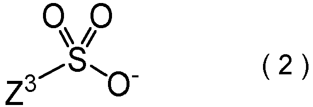 in which Z³ represents a fluorine atom, an alkyl group or an alkoxy group each having 1 or more and 4 or less carbon atoms which may be substituted with a halogen atom, or an alkenyl group or alkenyloxy group having 2 or more and 4 or less carbon atoms which may be substituted with a halogen atom.

The nonaqueous electrolytic solution battery produced by using the nonaqueous electrolytic solution of the present invention can suppress the malfunction of the current cut-off valve of the battery and improve the discharge power capacity. The action and principle thereof are not necessarily clear, but are presumed as follows. However, the present invention is not limited to the action and principle described below.

Since the compound (A) represented by the general formula (1) has a terminal alkyne moiety having less steric hindrance, the compound (A) forms a coordinate bond with a transition metal element present in the positive electrode. Therefore, contact of other electrolytic solution components with the surface of the positive electrode can be suppressed, and the oxidative decomposition reaction of the electrolytic solution can be suppressed. However, when the battery is in an overcharged state and the positive electrode potential becomes more electropositive than the normal use potential, the compound (A) itself coordinated to the positive electrode is oxidatively decomposed to cause gas generation.

Here, it is also considered that if the pressure of the current cut-off valve is appropriately set, the current cut-off valve can be operated in the event of an abnormality, such as overcharge while suppressing malfunction of the current cut-off valve during normal use, but since the compound (A) has an electropositive reduction potential, it is easily reduced and decomposed at the negative electrode more than the action on the positive electrode. Therefore, even when only the compound (A) is added to the electrolytic solution, the compound (A) hardly appropriately acts on the positive electrode, and the malfunction of the current cut-off valve of the battery cannot be effectively suppressed.

On the other hand, since the anion (B) represented by the general formula (2) has an electron-withdrawing group, it causes a nucleophilic substitution reaction in the presence of a nucleophilic agent. Since a surface functional group and an anion compound generated by reductive decomposition of the electrolytic solution are present on the surface of the negative electrode, these and the anion (B) cause a nucleophilic substitution reaction to form a bond. As a result, the generated negative electrode surface film component has a very stable form, and continuous decomposition of the electrolytic solution can be suppressed.

Therefore, when the compound (A) and the anion (B) are used in combination, the compound (A) can be prevented from being consumed by reductive decomposition at the negative electrode, and can effectively act on the positive electrode. As a result, gas generation can be induced when the battery is in an overcharged state, while gas generation during normal use can be suppressed. In addition, since the compound (A) has an effect of suppressing the interface resistance of the positive electrode and the anion (B) has an effect of suppressing the interface resistance of the negative electrode, it is presumed that the discharge power capacity can be improved by using the compound (A) and the anion (B) in combination at a specific mass ratio.

Hereinafter, embodiments of the present invention will be described, but the present invention is not limited to the following embodiments, and can be arbitrarily modified and carried out without departing from the gist of the present invention.

When the expression "to" is used in the present specification, it is used as an expression including numerical values or physical property values before and after the expression.

In addition, in the present specification, the term "independently" used when two or more objects are described in combination is used to mean that the two or more objects may be the same or different.

### [1-1. Compound (A) Represented by General Formula (1) and Anion (B) Represented by General Formula (2)]

The nonaqueous electrolytic solution of the present invention (hereinafter, also simply referred to as "nonaqueous electrolytic solution") contains a compound (A) represented by the general formula (1) and an anion (B) represented by the general formula (2).

The nonaqueous electrolytic solution may contain an electrolyte, a nonaqueous solvent for dissolving the electrolyte, similarly to a general nonaqueous electrolytic solution.

### [1-1-1. Compound (A) Represented by General Formula (1)]

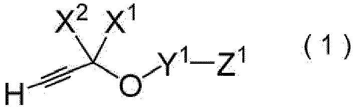

X¹ and X² in the general formula (1) each independently represent a hydrogen atom or an aliphatic hydrocarbon group having 1 or more and 3 or less carbon atoms which may be substituted with a halogen atom. X¹ and X² are each independently a hydrogen atom or an aliphatic hydrocarbon group having 1 or 2 carbon atoms which may be substituted with a halogen atom, and particularly preferably a hydrogen atom, from the viewpoint of reducing steric hindrance around the alkyne moiety and facilitating the action on the positive electrode.

Examples of the aliphatic hydrocarbon group having 1 or more and 3 or less carbon atoms include an alkyl group, such as a methyl group, an ethyl group, a n-propyl group, or an isopropyl group; an alkenyl group, such as an ethenyl group or a propenyl group; and a cycloalkyl group, such as a cyclopropyl group.

Among these, from the viewpoint of suppressing the reactivity in the negative electrode, an alkyl group is preferable, a methyl group or an ethyl group is more preferable, and a methyl group is still more preferable.

Y¹ in the general formula (1) is a divalent atomic group selected from the structure group represented by the following formula (1-1).

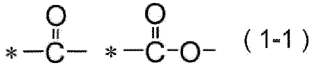

In the formula (1-1), * represents a bonding site to an oxygen atom in the formula (1).

In the above formula (1-1), a divalent atomic group represented by the following formula (1-2) is preferable from the viewpoint of suppressing excessive oxidative decomposition in the positive electrode and suppressing decomposition in the negative electrode.

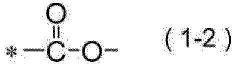

In the formula (1-2), * represents a bonding site to an oxygen atom in the formula (1).

Z¹ in the general formula (1) represents an alkyl group having 1 or more and 5 or less carbon atoms, an alkenyl group having 2 or more and 5 or less carbon atoms, or a monovalent substituent represented by the following formula (1-3).

Here, the "alkyl group" and the "alkenyl group" mean an"unsubstituted alkyl group" and an "unsubstituted alkenyl group", respectively. 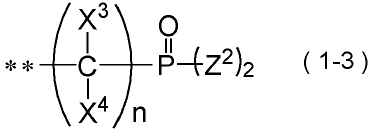 In the formula (1-3), Z² represents an alkyl group or an alkoxy group each having 1 or more and 3 or less carbon atoms which may be substituted with a halogen atom, or an alkoxyalkyl group having 2 or more and 4 or less carbon atoms which may be substituted with a halogen atom; X³ and X⁴ each independently represent a hydrogen atom or a halogen atom; n represents an integer of 1 or more and 5 or less; and ** in the formula (1-3) represents a bonding site to Y¹ in the formula (1).

Examples of the alkyl group having 1 or more and 5 or less carbon atoms as Z¹ include a methyl group, an ethyl group, a n-propyl group, an isopropyl group, a n-butyl group, and a n-pentyl group, and examples of the alkenyl group having 2 or more and 5 or less carbon atoms include an ethenyl group, a propenyl group, a butenyl group, and a pentenyl group.

Among these, from the viewpoint of suppressing excessive oxidative decomposition, an alkyl group having 1 or more and 3 or less carbon atoms or an alkenyl group having 2 or 3 carbon atoms is preferable, a methyl group, an ethyl group, a n-propyl group, an ethenyl group, or a propenyl group is more preferable, and a methyl group is particularly preferable.

Z² in the above formula (1-3) represents an alkyl group or an alkoxy group each having 1 or more and 3 or less carbon atoms which may be substituted with a halogen atom, or an alkoxyalkyl group having 2 or more and 4 or less carbon atoms.

Examples of the alkyl group having 1 or more and 3 or less carbon atoms as Z² include a methyl group, an ethyl group, a n-propyl group, and an isopropyl group; examples of the alkoxy group having 1 or more and 3 or less carbon atoms include a methoxy group, an ethoxy group, a n-propoxy group, and an isopropoxy group; and examples of the alkoxyalkyl group having 2 or more and 6 or less carbon atoms include a methoxymethyl group, an ethoxymethyl group, a n-propoxymethyl group, and an isopropoxymethyl group. Among these, an alkoxy group having 1 or more and 3 or less carbon atoms is preferable, a methoxy group and an ethoxy group are more preferable, and an ethoxy group is still more preferable.

X³ and X⁴ in the above formula (1-3) are each preferably a hydrogen atom, and n is preferably 1 or 2, and more preferably 1.

Examples of the compound (A) represented by the general formula (1) include the following compounds.

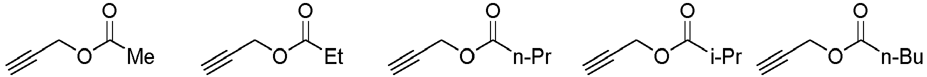

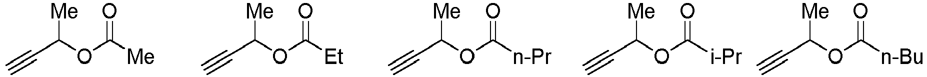

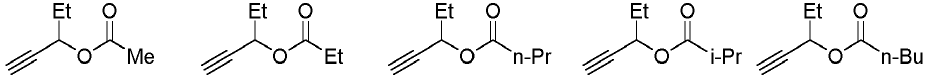

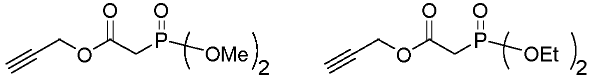

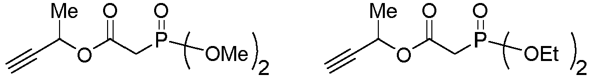

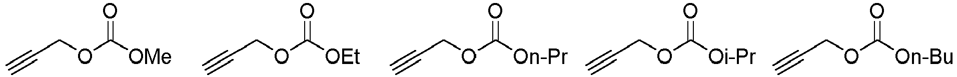

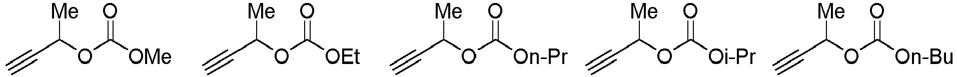

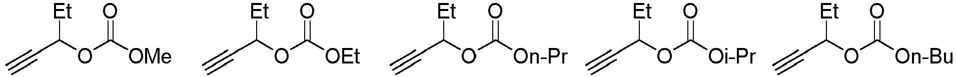

Among the above compounds, the following compounds are preferred.

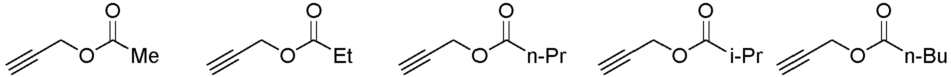

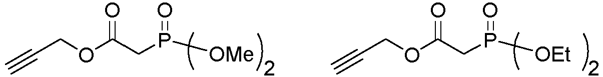

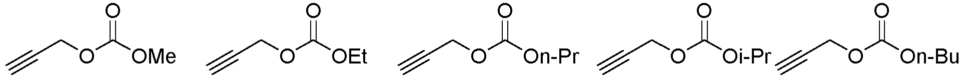

Among the above compounds, the following compounds are more preferred.

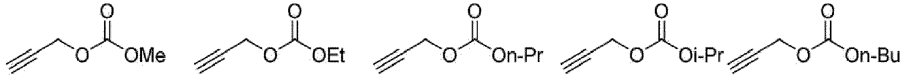

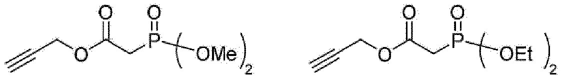

Among the above compounds, the following compounds are still more preferred.

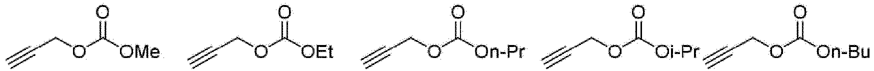

Among the above compounds, 2-propynyl methyl carbonate represented by the following formula (1-4) is even more preferred.

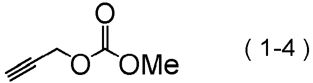

The compound (A) represented by the general formula (1) may be used alone or in combination of two or more thereof in an arbitrary ratio. In the case where the nonaqueous electrolytic solution contains two or more kinds of the compound (A), the total amount thereof is regarded as the content of the compound. The content of the compound (A) is not particularly limited, and is arbitrary as long as the effects of the present invention are not impaired.

The content of the compound (A) represented by the general formula (1) is usually 0.001% by mass or more, preferably 0.01% by mass or more, and more preferably 0.1% by mass or more, and is usually 10% by mass or less, preferably 5% by mass or less, more preferably 3% by mass or less, still more preferably 2% by mass or less, and even more preferably 1% by mass or less, with respect to 100% by mass of the nonaqueous electrolytic solution.

The content of the compound (A) represented by the general formula (1) is usually 0.001% by mass or more and 10% by mass or less, preferably 0.001% by mass or more and 5% by mass or less, more preferably 0.001% by mass or more and 3% by mass or less, still more preferably 0.001% by mass or more and 2% by mass or less, even more preferably 0.001% by mass or more and 1% by mass or less, and yet still more preferably 0.01% by mass or more and 1% by mass or less, with respect to 100% by mass of the nonaqueous electrolytic solution.

Identification of the compound (A) and measurement of the content thereof can be performed by nuclear magnetic resonance (NMR) spectroscopy.

### [1-1-2. Anion (B) Represented by General Formula (2)]

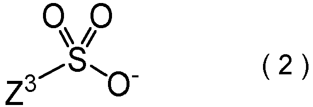

In the general formula (2), Z³ represents a fluorine atom, an alkyl group or an alkoxy each group having 1 or more and 4 or less carbon atoms which may be substituted with a halogen atom, or an alkenyl group or alkenyloxy group having 2 or more and 4 or less carbon atoms which may be substituted with a halogen atom.

Z³ is preferably a fluorine atom, an alkoxy group or alkenyloxy group each of which may be substituted with a halogen atom, more preferably a fluorine atom, an unsubstituted alkyl group having 2 or more and 4 or less carbon atoms or an unsubstituted alkoxy group having 2 or more and 4 or less carbon atoms, and still more preferably a fluorine atom or an unsubstituted alkoxy group having 2 or more and 4 or less carbon atoms, from the viewpoint of enhancing the reactivity in the negative electrode.

From the viewpoint of oxidation resistance, the alkyl group and the alkenyl group each of which may be substituted with a halogen atom are preferably an alkyl group having 1 or more and 3 or less carbon atoms and an alkenyl group having 2 or more and 3 or less carbon atoms each of which may be substituted with a halogen atom, more preferably an alkyl group having 1 or 2 carbon atoms and an alkenyl group having 2 or 3 carbon atoms each of which may be substituted with a halogen atom, still more preferably a methyl group and an ethyl group each of which may be substituted with a halogen atom, even more preferably an unsubstituted methyl group and an unsubstituted ethyl group, and particularly preferably an unsubstituted methyl group.

The compound containing the anion represented by the general formula (2) is usually an acid or a salt. The compound containing the anion represented by the general formula (2) is preferably a salt, and the counter cation thereof is preferably an alkali metal cation, such as a lithium cation, a sodium cation, or a potassium cation, and more preferably a lithium cation.

Specific examples of the anion (B) represented by the general formula (2) include sulfate anions, such as a methyl sulfate anion, an ethyl sulfate anion, and a n-propyl sulfate anion; and sulfonate anions, such as a fluorosulfonate anion, a methanesulfonate anion, an ethanesulfonate anion, and a n-propanesulfonate anion. Among these, one or more selected from a fluorosulfonate anion, a methyl sulfate anion, an ethyl sulfate anion, and a n-propyl sulfate anion are more preferable, one or more selected from a fluorosulfonate anion and a methyl sulfate anion are still more preferable, and a fluorosulfonate anion is particularly preferable. The anion (B) represented by the general formula (2) may be used alone or in combination of two or more thereof in an arbitrary ratio.

The content of the anion (B) represented by the general formula (2) is not particularly limited and is optional as long as the effects of the present invention are not impaired, and is usually 0.001% by mass or more, preferably 0.01% by mass or more, more preferably 0.1% by mass or more, and still more preferably 0.5% by mass or more, and is usually 10% by mass or less, preferably 5% by mass or less, more preferably 3% by mass or less, still more preferably 2% by mass or less, and most preferably 1.5% by mass or less, with respect to the total amount (100% by mass) of the nonaqueous electrolytic solution.

The content of the compound (B) represented by the general formula (2) is usually 0.001% by mass or more and 10% by mass or less, preferably 0.001% by mass or more and 5% by mass or less, more preferably 0.001% by mass or more and 3% by mass or less, still more preferably 0.001% by mass or more and 2% by mass or less, even more preferably 0.001% by mass or more and 1.5% by mass or less, and yet still more preferably 0.01% by mass or more and 1.5% by mass or less, with respect to 100% by mass of the nonaqueous electrolytic solution.

In the nonaqueous electrolytic solution, the mass ratio [(A)/(B)] of the content of the compound (A) represented by the general formula (1) to the content of the anion (B) represented by the general formula (2) is 0.01 or more, preferably 0.05 or more, more preferably 0.1 or more, still more preferably 0.15 or more, and even more preferably 0.2 or more, and is 1.2 or less, preferably 1.0 or less, more preferably 0.9 or less, still more preferably 0.8 or less, and even more preferably 0.7 or less, from the viewpoint of allowing the nonaqueous electrolytic solution battery to exhibit a sufficient cycle property-improving effect, suppressing an increase in resistance, and improving discharge power capacity.

The mass ratio [(A)/(B)] of the content of the compound (A) represented by the general formula (1) to the content of the anion (B) represented by the general formula (2) is 0.01 or more and 1.2 or less, preferably 0.01 or more and 1.0 or less, more preferably 0.01 or more and 0.9 or less, still more preferably 0.01 or more and 0.8 or less, and even more preferably 0.01 or more and 0.7 or less.

Identification of the anion (B) and measurement of the content thereof can be performed by nuclear magnetic resonance (NMR) spectroscopy.

### [1-2. Electrolyte]

### <Lithium Salt>

As the electrolyte in the nonaqueous electrolytic solution, a lithium salt is usually used. The lithium salts are not particularly limited, and any lithium salts can be used. However, lithium salts corresponding to [1-1-2. Anion (B) Represented by General Formula (2)] are excluded.

Specific examples thereof include lithium fluoroborate salts, lithium fluorophosphate salts, lithium tungstate salts, lithium carboxylate salts, lithium imide salts, lithium methide salts, lithium oxalate salts, and fluorine-containing organic lithium salts.

Among these, from the viewpoint of improving low-temperature output properties, high-rate charging and discharging properties, impedance properties, high-temperature storage properties, and cycle properties, preferred are lithium fluoroborate salts, such as LiBF₄; lithium fluorophosphate salts, such as LiPF₆, Li₂PO₃F, and LiPO₂F₂; lithium imide salts, such as LiN(FSO₂)₂, LiN(FSO₂)(CF₃SO₂), LiN(CF₃SO₂)₂, and LiN(C₂F₅SO₂)₂, lithium cyclic 1,2-perfluoroethanedisulfonylimide, and lithium cyclic 1,3-perfluoropropanedisulfonylimide; lithium methide salts, such as LiC(FSO₂)₃, LiC(CF₃SO₂)₃, and LiC(C₂F₅SO₂)₃; and lithium oxalate salts, such as lithium difluorooxalatoborate, lithium bis(oxalato)borate, lithium tetrafluorooxalatophosphate, lithium difluorobis(oxalato)phosphate, and lithium tris(oxalato)phosphate, more preferred are one or more selected from LiPF₆, LiN(FSO₂)₂, and lithium bis(oxalate)borate, and particularly preferred is LiPF₆.

The above-mentioned electrolyte salt may be used alone or in combination of two or more thereof in an arbitrary ratio.

The combination of two or more kinds of electrolyte salts is not particularly limited, and examples thereof include a combination of LiPF₆ and LiN(FSO₂)₂, a combination of LiPF₆ and LiBF₄, a combination of LiPF₆ and LiN(CF₃SO₂)₂, a combination of LiBF₄ and LiN(FSO₂)₂, and a combination of LiBF₄, LiPF₆, and LiN(FSO₂)₂. Among these, a combination of LiPF₆ and LiN(FSO₂)₂, a combination of LiPF₆ and LiBF₄, and a combination of LiBF₄, LiPF₆, and LiN(FSO₂)₂ are preferable.

The total concentration of the electrolytes is not particularly limited, but is usually 8% by mass or more, preferably 8.5% by mass or more, and more preferably 9% by mass or more, and is usually 18% by mass or less, preferably 17% by mass or less, and more preferably 16% by mass or less, with respect to the total amount of the nonaqueous electrolytic solution, from the viewpoint that the electrical conductivity makes the battery operation appropriate and sufficient output properties are exhibited.

### [1-3. Nonaqueous Solvent]

The nonaqueous electrolytic solution, like a general nonaqueous electrolytic solution, usually contains, as a main component thereof, a nonaqueous solvent in which the above-described electrolyte is dissolved. The nonaqueous solvent to be used is not particularly limited as long as it dissolves the above-described electrolyte, and a known organic solvent can be used.

Examples of the organic solvent include a saturated cyclic carbonate, a linear carbonate, a linear carboxylate, a cyclic carboxylate, an ether-based compound, and a sulfone-based compound. The organic solvent is not particularly limited, but it is preferable to contain a linear carboxylate.

The organic solvent may be used alone or in combination of two or more thereof in an arbitrary ratio.

The combination of two or more kinds of organic solvents is not particularly limited, and examples thereof include a combination of a saturated cyclic carbonate and a linear carboxylate, a combination of a cyclic carboxylate and a linear carbonate, and a combination of a saturated cyclic carbonate, a linear carbonate, and a linear carboxylate. Among these, a combination of a saturated cyclic carbonate and a linear carbonate, and a combination of a saturated cyclic carbonate, a linear carbonate, and a linear carboxylate are preferable.

### [1-3-1. Saturated Cyclic Carbonate]

Examples of the saturated cyclic carbonate include those having an alkylene group having 2 to 4 carbon atoms, and a saturated cyclic carbonate having 2 to 3 carbon atoms is preferable from the viewpoint of improving battery characteristics caused by an improvement in the degree of dissociation of lithium ions.

Specific examples of the saturated cyclic carbonate include ethylene carbonate, propylene carbonate, and butylene carbonate. Among these, ethylene carbonate and propylene carbonate are preferable, and ethylene carbonate which is less likely to be oxidized and reduced is more preferable. The saturated cyclic carbonate may be used alone or in combination of two or more thereof in an arbitrary ratio.

The content of the saturated cyclic carbonate is not particularly limited, and is arbitrary as long as the effect of the invention according to the present embodiment is not impaired. The content of the saturated cyclic carbonate is usually 3% by volume or more, and preferably 5% by volume or more, and on the other hand, is usually 90% by volume or less, preferably 85% by volume or less, and more preferably 80% by volume or less, with respect to the total amount of the nonaqueous solvent. By setting the content within this range, a decrease in electrical conductivity caused by a decrease in the dielectric constant of the nonaqueous electrolytic solution is avoided, and the large current discharging properties, the stability with respect to the negative electrode, and the cycle properties of the nonaqueous electrolytic solution secondary battery are easily set to be in a favorable range, the oxidation and reduction resistance of the nonaqueous electrolytic solution is improved, and the stability during high-temperature storage tends to be improved.

In the present specification, "% by volume" means % by volume at 25°C and 1 atm.

### [1-3-2. Linear Carbonate]

As the linear carbonate, for example, a linear carbonate having 3 to 7 carbon atoms is usually used, and a linear carbonate having 3 to 5 carbon atoms is preferably used in order to adjust the viscosity of the electrolytic solution to an appropriate range.

Specific examples of the linear carbonate include dimethyl carbonate, diethyl carbonate, di-n-propyl carbonate, diisopropyl carbonate, n-propyl isopropyl carbonate, ethyl methyl carbonate, and methyl-n-propyl carbonate. The linear carbonate is preferably one or more selected from dimethyl carbonate, diethyl carbonate, and ethyl methyl carbonate.

Linear carbonates having a fluorine atom (hereinafter, also referred to as "fluorinated linear carbonate") can also be suitably used. The number of fluorine atoms contained in the fluorinated linear carbonate is not particularly limited as long as it is 1 or more, but is usually 6 or less, and preferably 4 or less. When the fluorinated linear carbonate has a plurality of fluorine atoms, the plurality of fluorine atoms may be bonded to the same carbon or may be bonded to different carbons.

Examples of the fluorinated linear carbonate include a fluorinated dimethyl carbonate derivative, such as fluoromethyl methyl carbonate; a fluorinated ethyl methyl carbonate derivative, such as 2-fluoroethyl methyl carbonate; and a fluorinated diethyl carbonate derivative, such as ethyl-(2-fluoroethyl) carbonate.

The linear carbonate may be used alone or in combination of two or more thereof in an arbitrary ratio.

The content of the linear carbonate is not particularly limited, but is usually 15% by volume or more, preferably 20% by volume or more, and more preferably 25% by volume or more, and is usually 90% by volume or less, preferably 85% by volume or less, and more preferably 80% by volume or less, with respect to the total amount of the nonaqueous solvent in the nonaqueous electrolytic solution, from the viewpoint of setting the viscosity of the nonaqueous electrolytic solution in an appropriate range, suppressing a decrease in ion conductivity, and improving the output properties of the nonaqueous electrolytic solution secondary battery.

Furthermore, by combining ethylene carbonate with a specific linear carbonate in a specific content, the battery performance can be significantly improved.

For example, when dimethyl carbonate and ethyl methyl carbonate are selected as the specific linear carbonate, the content of ethylene carbonate is arbitrary as long as the effects of the present invention are not impaired, but is usually 15% by volume or more, and preferably 20% by volume or more, and is usually 45% by volume or less, and preferably 40% by volume or less, with respect to the total amount of the solvent in the nonaqueous electrolytic solution; the content of dimethyl carbonate is usually 20% by volume or more, and preferably 30% by volume or more, and is usually 50% by volume or less, and preferably 45% by volume or less, with respect to the total amount of the nonaqueous solvent in the nonaqueous electrolytic solution; and the content of ethyl methyl carbonate is usually 20% by volume or more, and preferably 30% by volume or more, and is usually 50% by volume or less, and preferably 45% by volume or less, with respect to the total amount of the nonaqueous solvent in the nonaqueous electrolytic solution.

### [1-3-3. Linear Carboxylate]

Examples of the linear carboxylate include methyl acetate, ethyl acetate, propyl acetate, butyl acetate, methyl propionate, ethyl propionate, propyl propionate, methyl butyrate, ethyl butyrate, methyl valerate, methyl isobutyrate, ethyl isobutyrate, and methyl pivalate. Among these, methyl acetate, ethyl acetate, propyl acetate, and butyl acetate are preferable from the viewpoint of improving battery characteristics. Linear carboxylates obtained by substituting a part of hydrogen of the above compounds with fluorine (for example, methyl trifluoroacetate, and ethyl trifluoroacetate) can also be suitably used.

The blending amount of the linear carboxylate is usually 1% by volume or more, preferably 5% by volume or more, and more preferably 15% by volume or more with respect to the total amount of the nonaqueous solvent, from the viewpoint of improving the electrical conductivity of the nonaqueous electrolytic solution and improving the large current discharging properties of the nonaqueous electrolytic solution battery. On the other hand, the upper limit of the blending amount thereof is usually 70% by volume or less, preferably 50% by volume or less, and more preferably 40% by volume or less from the viewpoint of setting the viscosity of the nonaqueous electrolytic solution within an appropriate range, avoiding a decrease in electrical conductivity, suppressing an increase in negative electrode resistance, and setting the large current discharging properties of the nonaqueous electrolytic solution secondary battery within a favorable range.

### [1-3-4. Cyclic Carboxylate]

Examples of the cyclic carboxylate include γ-butyrolactone and γ-valerolactone. Among these, γ-butyrolactone is more preferable. Cyclic carboxylates obtained by substituting a part of hydrogen of the above-described compounds with fluorine can also be suitably used.

The blending amount of the cyclic carboxylate is usually 1% by volume or more, preferably 5% by volume or more, and more preferably 15% by volume or more with respect to the total amount of the nonaqueous solvent, from the viewpoint of improving the electrical conductivity of the nonaqueous electrolytic solution and improving the large current discharging properties of the nonaqueous electrolytic solution battery. On the other hand, the upper limit of the blending amount thereof is usually 70% by volume or less, preferably 50% by volume or less, and more preferably 40% by volume or less from the viewpoint of setting the viscosity of the nonaqueous electrolytic solution within an appropriate range, avoiding a decrease in electrical conductivity, suppressing an increase in negative electrode resistance, and setting the large current discharging properties of the nonaqueous electrolytic solution secondary battery within a favorable range.

### [1-3-5. Ether-based Compound]

Preferred examples of the ether-based compound include a linear ether having 3 to 10 carbon atoms, such as dimethoxymethane, diethoxymethane, ethoxymethoxymethane, ethylene glycol di-n-propyl ether, ethylene glycol di-n-butyl ether, and diethylene glycol dimethyl ether, and a cyclic ether having 3 to 6 carbon atoms, such as tetrahydrofuran, 2-methyltetrahydrofuran, 3-methyltetrahydrofuran, 1,3-dioxane, 2-methyl-1,3-dioxane, 4-methyl-1,3-dioxane, and 1,4-dioxane. Some of the hydrogen atoms of the ether-based compound may be substituted with a fluorine atom.

Among these, as the linear ether having 3 to 10 carbon atoms, dimethoxymethane, diethoxymethane, and ethoxymethoxymethane are preferable from the viewpoint of having a high solvating ability to lithium ions, improving ion dissociation, reducing viscosity, and providing high ion conductivity, and as the cyclic ether having 3 to 6 carbon atoms, tetrahydrofuran, 1,3-dioxane, and 1,4-dioxane are preferable from the viewpoint of providing high ion conductivity.

The content of the ether-based compound is arbitrary as long as the effects of the present invention are not impaired, but is usually 1% by volume or more, preferably 2% by volume or more, and more preferably 3% by volume or more, and is usually 30% by volume or less, preferably 25% by volume or less, and more preferably 20 vol% or less, with respect to the total amount of the nonaqueous solvent in the nonaqueous electrolytic solution. When the content of the ether-based compound is within the above range, it is easy to secure the effect of improving the degree of dissociation of lithium ions by the ether-based compound and the effect of improving ion conductivity caused by a decrease in the viscosity of the nonaqueous electrolytic solution. In addition, when the negative electrode active material is a carbon-based material, it is possible to suppress a phenomenon in which linear ether is co-inserted together with lithium ions, and thus it is possible to set input and output properties or charging and discharging rate properties to be in an appropriate range.

### [1-3-6. Sulfone-based Compound]

The sulfone-based compound is not particularly limited, and may be a cyclic sulfone or a linear sulfone. In the case of a cyclic sulfone, the number of carbon atoms is usually 3 to 6, and preferably 3 to 5, and in the case of a linear sulfone, the number of carbon atoms is usually 2 to 6, and preferably 2 to 5. The number of sulfonyl groups in one molecule of the sulfone-based compound is not particularly limited, but is usually 1 or 2.

Examples of the cyclic sulfone include monosulfone compounds, such as trimethylene sulfones, tetramethylene sulfones, and hexamethylene sulfones; and disulfone compounds, such as trimethylene disulfones, tetramethylene disulfones, and hexamethylene disulfones. Among these, from the viewpoint of dielectric constant and viscosity, tetramethylene sulfones, tetramethylene disulfones, hexamethylene sulfones, and hexamethylene disulfones are more preferable, and tetramethylene sulfones (sulfolanes) are still more preferable.

As sulfolanes, sulfolane and sulfolane derivatives are preferable. The sulfolane derivative is preferably one in which at least one hydrogen atom bonded to a carbon atom constituting a sulfolane ring is substituted with a fluorine atom, an alkyl group, or a fluorinesubstituted alkyl group.

Among these, 2-methylsulfolane, 3-methylsulfolane, 2-fluorosulfolane, 3-fluorosulfolane, 2,3-difluorosulfolane, 2-trifluoromethylsulfolane, and 3-trifluoromethylsulfolane are preferable from the viewpoint of high ion conductivity and high input and output.

In addition, examples of the linear sulfone include dimethyl sulfone, ethyl methyl sulfone, diethyl sulfone, monofluoromethyl methyl sulfone, difluoromethyl methyl sulfone, trifluoromethyl methyl sulfone, and pentafluoroethyl methyl sulfone. Among these, dimethyl sulfone, ethyl methyl sulfone, and monofluoromethyl methyl sulfone are preferable from the viewpoint of improving high-temperature storage stability of the electrolytic solution.

The content of the sulfone-based compound is arbitrary as long as the effects of the present invention are not impaired, but from the viewpoint of improving high-temperature storage stability, it is usually 0.3% by volume or more, preferably 0.5% by volume or more, and more preferably 1% by volume or more, and is usually 40% by volume or less, preferably 35% by volume or less, and more preferably 30% by volume or less, with respect to the total amount of the nonaqueous solvent in the nonaqueous electrolytic solution.

### [1-4. Auxiliary Agent]

The nonaqueous electrolytic solution of the present invention may contain various auxiliary agents as long as the effects of the present invention are not impaired. As the auxiliary agent, conventionally known auxiliary agents can be arbitrarily used. The auxiliary agent may be used alone or in combination of two or more thereof in an arbitrary ratio.

Examples of the auxiliary agent include a cyclic carbonate having a carbon-carbon unsaturated bond, a fluorine-containing cyclic carbonate, a compound having an isocyanate group, a compound having an isocyanuric acid skeleton, a compound having a cyano group, a sulfur-containing organic compound, a phosphorus-containing organic compound, a siliconcontaining compound, an aromatic compound, a fluorine-free carboxylate, a cyclic compound having an ether bond, a carboxylic acid anhydride, a borate, an oxalate, a monofluorophosphate, and a difluorophosphate. Examples thereof include compounds described in WO 2015/111676.

The content of the auxiliary agent is not particularly limited and is arbitrary as long as the effects of the present invention are not impaired, but is usually 0.001% by mass or more, preferably 0.01% by mass or more, and more preferably 0.1% by mass or more, and is usually 10% by mass or less, preferably 5% by mass or less, more preferably 3% by mass or less, still more preferably 1% by mass or less, and even more preferably less than 1% by mass with respect to the total amount of the nonaqueous electrolytic solution.

The cyclic compound having an ether bond can be used as an auxiliary agent in the nonaqueous electrolytic solution, and as shown in [1-3. Nonaqueous Solvent], those that can be used as nonaqueous solvents are also included.

When a cyclic compound having an ether bond is used as an auxiliary agent, it is preferably used in an amount of less than 4% by mass. The borate, oxalate, monofluorophosphate, and difluorophosphate can be used as an auxiliary agent in the nonaqueous electrolytic solution, and as shown in [1-2. Electrolyte], those that can be used as electrolytes are also included. When these compounds are used as auxiliary agents, they are preferably used in an amount of less than 3% by mass.

Among these, a fluorine-containing cyclic carbonate and a cyclic carbonate having a carbon-carbon unsaturated bond are preferable, and a fluorine-containing cyclic carbonate is more preferable from the viewpoint of easily forming a stable interface protective surface film.

### [1-4-1. Fluorine-Containing Cyclic Carbonate]

The fluorine-containing cyclic carbonate is not particularly limited as long as it has a cyclic carbonate structure and contains a fluorine atom.

Examples of the fluorine-containing cyclic carbonate include a fluorinated product of a cyclic carbonate having an alkylene group having 2 or more and 6 or less carbon atoms and a derivative thereof, and examples thereof include a fluorinated product of ethylene carbonate (hereinafter, also referred to as "fluorinated ethylene carbonate") and a derivative thereof. Examples of the derivative of the fluorinated product of ethylene carbonate include a fluorinated product of ethylene carbonate substituted with an alkyl group (for example, an alkyl group having 1 or more and 4 or less carbon atoms). Among these, fluorinated ethylene carbonate having a fluorine number of 1 or more and 8 or less and a derivative thereof are preferable.

Examples of the fluorinated ethylene carbonate having a fluorine number of 1 or more and 8 or less and derivatives thereof include monofluoroethylene carbonate, 4,4-difluoroethylene carbonate, 4,5-difluoroethylene carbonate, 4-fluoro-4-methylethylene carbonate, 4,5-difluoro-4-methylethylene carbonate, 4-fluoro-5-methylethylene carbonate, 4,4-difluoro-5-methylethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoroethylene carbonate, 4-(fluoromethyl)-5-fluoroethylene carbonate, 4-fluoro-4,5-dimethylethylene carbonate, 4,5-difluoro-4,5-dimethylethylene carbonate, and 4,4-difluoro-5,5-dimethylethylene carbonate. Among these, one or more selected from monofluoroethylene carbonate, 4,4-difluoroethylene carbonate, and 4,5-difluoroethylene carbonate are preferable from the viewpoint of imparting high ion conductivity to the electrolytic solution and facilitating formation of a stable interface protective surface film.

The fluorine-containing cyclic carbonate may be used alone or in combination of two or more thereof in an arbitrary ratio.

The content of the fluorine-containing cyclic carbonate (the total amount in the case of two or more kinds) is preferably 0.001% by mass or more, more preferably 0.01% by mass or more, still more preferably 0.1% by mass or more, even more preferably 0.5% by mass or more, and yet still more preferably 0.8% by mass or more, and is preferably 10% by mass or less, more preferably 7% by mass or less, still more preferably 5% by mass or less, even more preferably 3% by mass or less, and yet still more preferably 2% by mass or less, with respect to 100% by mass of the nonaqueous electrolytic solution.

In addition, in a case where the fluorine-containing cyclic carbonate is used as the nonaqueous solvent, the content thereof is preferably 1% by volume or more, more preferably 5% by volume or more, and still more preferably 10% by volume or more, and is preferably 50% by volume or less, more preferably 35% by volume or less, and still more preferably 25% by volume or less, with respect to 100% by volume of the nonaqueous solvent.

In a case where the nonaqueous electrolytic solution contains LiPF₆, the mass ratio of the total content of the fluorine-containing cyclic carbonate to the content of LiPF₆ [(fluorine-containing cyclic carbonate)/LiPF₆] is usually 0.00005 or more, preferably 0.001 or more, more preferably 0.01 or more, still more preferably 0.02 or more, and even more preferably 0.025 or more, and is usually 0.5 or less, preferably 0.45 or less, more preferably 0.4 or less, and still more preferably 0.35 or less, from the viewpoint of improving energy device characteristics, particularly durability characteristics, and minimizing decomposition side reactions of LiPF₆ in the energy device system.

### [2. Nonaqueous Electrolytic Solution Battery]

The nonaqueous electrolytic solution battery of the present invention is a nonaqueous electrolytic solution battery including a positive electrode having a positive electrode active material capable of absorbing and releasing a metal ion, a negative electrode, and the nonaqueous electrolytic solution of the present invention, and is preferably a lithium battery. In addition, it is also possible to mix and use other nonaqueous electrolytic solution with the nonaqueous electrolytic solution of the present invention within a range not departing from the gist of the present invention.

### [2-1. Lithium Battery]

The lithium battery according to the present invention includes a positive electrode having a collector and a positive electrode active material layer provided on the collector, a negative electrode having a collector and a negative electrode active material layer provided on the collector and capable of absorbing and releasing lithium ions, and the nonaqueous electrolytic solution of the present invention.

In the present invention, the lithium battery is a general term for a lithium ion primary battery and a lithium ion secondary battery.

The configuration of the lithium battery other than the nonaqueous electrolytic solution of the present invention is the same as that of the conventionally known lithium battery. Usually, the lithium battery has a form in which a positive electrode and a negative electrode are laminated via a porous film (separator) impregnated with a nonaqueous electrolytic solution, and these are stored in a case (outer packaging body).

### [2-2. Positive Electrode]

The positive electrode includes a positive electrode active material capable of absorbing and releasing lithium ions on at least a part of a surface of a collector. The positive electrode active material preferably includes a lithium transition metal-based compound.

### [2-2-1. Positive Electrode Active Material]

### [2-2-1-1. Lithium Transition Metal-Based Compound]

The lithium transition metal-based compound is a compound having a structure capable of desorbing and inserting lithium ions, and examples thereof include a sulfide, a phosphate compound, a silicate compound, a borate compound, and a lithium transition metal composite oxide. Among these, a phosphate compound and a lithium transition metal composite oxide are preferable, and a lithium transition metal composite oxide is more preferable.

Examples of the lithium transition metal composite oxide include a spinel structure capable of three dimensional diffusion and a layered structure capable of two dimensional diffusion of lithium ions.

The lithium transition metal composite oxide having a spinel structure is generally represented by the following formula (11).

LiₓM₂O₄ (11)

(In the formula (11), x satisfies 1 ≤ x ≤ 1.5, and M represents one or more transition metal elements.)

Specific examples of the oxides represented by the formula (11) include LiMn₂O₄, LiCoMnO₄, LiNi_{0.5}Mn_{1.5}O₄, and LiCoVO₄.

The lithium transition metal composite oxide having a layered structure is generally represented by the following composition formula (12).

Li₁₊ₓMO₂ (12)

(In the formula (12), x satisfies -0.1 ≤ x ≤ 0.5, and M represents one or more transition metal elements.)

Specific examples of the oxide represented by the formula (12) include LiCoO₂, LiNiO₂, LiNi_{0.85}Co_{0.10}Al_{0.05}O₂, LiNi_{0.8o}Co_{0.15}Al_{0.05}O₂, LiNi_{0.33}Co_{0.33}Mn_{0.33}O₂, Li_{1.05}Ni_{0.33}Co_{0.33}Mn_{0.33}O₂, LiNi_{0.5}Co_{0.2}Mn_{0.3}O₂, Li_{1.05}Ni_{0.5}Co_{0.2}Mn_{0.3}O₂, LiNi_{0.6}Co_{0.2}Mn_{0.2}O₂, LiNi_{0.8}Co_{0.1}Mn_{0.1}O₂, LiNi_{0.91}Co_{0.06}Mn_{0.03}O₂, LiNi_{0.91}Co_{0.06}Al_{0.03}O₂, and LiNi_{0.90}Co_{0.03}Al_{0.07}O₂.

Among these, from the viewpoint of improving battery capacity, a lithium transition metal composite oxide having a layered structure is preferable, and a lithium transition metal composite oxide represented by the following formula (13) is more preferable.

Liₐ₁Ni_{b1}M_{c1}O₂ (13)

(In the formula (13), a1, b1, and c1 satisfy 0.90 ≤ a1 ≤ 1.10, 0.65 ≤ b1 ≤ 0.98, and 0 ≤ c1 ≤ 0.20, respectively, and b1 + c1 = 1. M represents at least one element selected from the group consisting of Co, Mn, Al, Mg, Zr, Fe, Ti, and Er.)

Suitable examples of the lithium transition metal composite oxide represented by the formula (13) include LiNi_{0.7}Mn_{1.3}O₄, LiNi_{0.85}Co_{0.10}Al_{0.05}O₂, LiNi_{0.80}Co_{0.15}Al_{0.05}O₂, LiNi_{0.8}Co_{0.1}Mn_{0.1}O₂, LiNi_{0.91}Co_{0.06}Mn_{0.03}O₂, LiNi_{0.91}Co_{0.06}Al_{0.03}O₂, and LiNi_{0.90}Co_{0.03}Al_{0.07}O₂.

In the formula (13), b1 is preferably 0.70 ≤ b1 ≤ 0.98, more preferably 0.80 ≤ b1 ≤ 0.98, and still more preferably 0.90 ≤ b1 ≤ 0.98.

In the formulas (11) to (13), from the viewpoint of improving the structural stability of the lithium transition metal oxide and suppressing structural deterioration during repeated charging and discharging, M preferably contains Mn or Al, and more preferably contains Mn.

In particular, from the viewpoint of the structural stability of the lithium transition metal composite oxide, a lithium transition metal composite oxide represented by the following formula (14) is preferable.

Liₐ₂Ni_{b2}Co_{c2}M_{d2}O₂ (14)

(In the formula (14), a2, b2, c2, and d2 satisfy 0.90 ≤ a2 ≤ 1.10, 0.65 ≤ b2 ≤ 0.98, 0.01 ≤ c2 ≤ 0.06, and 0.01 ≤ d2 ≤ 0.04, respectively, and b2 +c2 + d2 = 1. M represents at least one element selected from the group consisting of Mn, Al, Mg, Zr, Fe, Ti, and Er.)

Suitable examples of the lithium transition metal composite oxide represented by the formula (14) include LiNi_{0.85}Co_{0.10}Al_{0.05}O₂, LiNi_{0.80}Co_{0.15}Al_{0.05}O₂, LiNi_{0.8}Co_{0.1}Mn_{0.1}O₂, LiNi_{0.91}Co_{0.06}Mn_{0.03}O₂, LiNi_{0.91}Co_{0.06}Al_{0.03}O₂, and LiNi_{0.90}Co_{0.03}Al_{0.07}O₂.

In the formula (14), b2 is preferably 0.70 ≤ b2 ≤ 0.98, more preferably 0.80 ≤ b2 ≤ 0.98, and still more preferably 0.90 ≤ b2 ≤ 0.98.

In the above formula (14), M preferably includes Mn or Al from the viewpoint of improving the structural stability of the lithium transition metal oxide and suppressing structural deterioration during repeated charging and discharging.

Identification of the positive electrode active material is performed by ICP emission spectroscopy after a sample is wet-decomposed.

### [2-2-1-2. Introduction of Foreign Element]

In addition, the lithium transition metal composite oxide may contain an element (foreign element) other than the element included in any one of the above formulas (11) to (14).

### [2-2-1-3. Surface Coating]

As the positive electrode, a positive electrode in which a material having a composition different from that of the positive electrode active material (surface adhered material) is adhered to the surface of the positive electrode active material may be used.

Examples of the surface adhered material include an oxide, such as aluminum oxide, a sulfate, such as lithium sulfate, and a carbonate, such as lithium carbonate. The surface adhered material can be adhered to the surface of the positive electrode active material by, for example, a method in which the material is dissolved or suspended in a solvent, impregnated into the positive electrode active material, and dried.

The amount of the surface adhered material is preferably 1 µmol/g or more, and more preferably 10 µmol/g or more, and is usually preferably 1 mmol/g or less, with respect to the positive electrode active material.

In the present specification, a material in which the above-mentioned surface adhered material is adhered to the surface of a positive electrode active material is also referred to as a "positive electrode active material".

### [2-2-1-4. Blend]

The positive electrode active material may be used alone or in combination of two or more thereof in an arbitrary ratio.

### [2-2-2. Configuration and Production Method of Positive Electrode]

A positive electrode using the positive electrode active material can be produced by an ordinary method. That is, the positive electrode can be obtained by a coating method in which a positive electrode active material and a binder, and if necessary, an electroconductive material, and a thickener are mixed by a dry method and formed into a sheet, and the sheet is pressurebonded to a positive electrode collector, or these materials are dissolved or dispersed in a liquid medium, such as an aqueous solvent or an organic solvent to form a slurry, and the slurry is applied to a positive electrode collector and dried to form a positive electrode active material layer on the collector. Further, for example, the positive electrode active material may be formed into a sheet electrode by roll forming, or may be formed into a pellet electrode by compression molding.

Hereinafter, a case where the slurry is sequentially applied to the positive electrode collector and dried will be described.

### [2-2-2-1. Content of Positive Electrode Active Material]

The content of the positive electrode active material in the positive electrode active material layer is usually 80% by mass or more and 99.5% by mass or less.

### [2-2-2-2. Electrode Density]

The positive electrode active material layer obtained by coating and drying is preferably compacted by a hand press or a roller press in order to increase the filling density of the positive electrode active material. The density of the positive electrode active material layer present on the collector is usually 1.5 g/cm³ or more, more preferably 2.0 g/cm³ or more, and particularly preferably 3.0 g/cm³ or more, and is usually 4.5 g/cm³ or less, more preferably 4.0 g/cm³ or less, and particularly preferably 3.5 g/cm³ or less.

The density of the positive electrode active material layer is measured by measuring the thickness and the weight of the positive electrode active material layer.

### [2-2-2-3. Electroconductive Material]

As the electroconductive material, any known electroconductive material can be used. Specific examples thereof include a metal material, such as copper and nickel; graphite, such as natural graphite and artificial graphite; carbon black, such as acetylene black; and a carbon-based material, such as amorphous carbon, such as needle coke. The electroconductive material may be used alone or in combination of two or more thereof in an arbitrary ratio. The electroconductive material is usually used so as to be contained in the positive electrode active material layer in an amount of 0.01% by mass or more and 50% by mass or less.

### [2-2-2-4. Binder]

In the case where the positive electrode active material layer is formed by a coating method, the type of the binder used for the production of the positive electrode active material layer is not particularly limited as long as the binder is a material that is dissolved or dispersed in a liquid medium for slurry. For example, in view of weather resistance, chemical resistance, heat resistance, and flame retardancy, a fluorine-based resin, such as polyvinyl fluoride, polyvinylidene fluoride, and polytetrafluoroethylene; and a CN group-containing polymer, such as polyacrylonitrile and polyvinylidene cyanide are preferable.

In addition, a mixture, a modified product, a derivative, a random copolymer, an alternating copolymer, a graft copolymer, and a block copolymer of the above-described polymer can also be used. The binder may be used alone or in combination of two or more thereof in an arbitrary ratio.

When a resin is used as the binder, the weight-average molecular weight of the resin is arbitrary as long as the effects of the present invention are not impaired, and is usually 10,000 or more and 3,000,000 or less. When the molecular weight is in this range, the strength of the electrode is improved, and the electrode can be suitably formed.

The proportion of the binder in the positive electrode active material layer is usually 0.1% by mass or more and 80% by mass or less.

### [2-2-2-5. Collector]

The material of the positive electrode collector is not particularly limited, and any known material can be used. Specific examples thereof include a metal material, such as aluminum, stainless steel, nickel plating, titanium, and tantalum, and aluminum is preferable.

Examples of the shape of the collector include a metal foil, a metal cylinder, a metal coil, a metal plate, a metal thin film, an expanded metal, a punched metal, and a foamed metal. Among these, a metal foil or a metal thin film is preferable. Note that the metal thin film may be appropriately formed in a mesh shape.

In the case where the collector for the positive electrode has a plate shape or a film shape, the collector may have any desired thickness, but the thickness is usually 1 µm or more and 1 mm or less.

### [2-2-2-6. Thickness of Positive Electrode Plate]

The thickness of the positive electrode plate is not particularly limited, but from the viewpoint of high capacity and high output, the thickness of the positive electrode active material layer obtained by subtracting the thickness of the collector from the thickness of the positive electrode plate is usually 10 µm or more and 500 µm or less with respect to one surface of the collector.

### [2-2-2-7. Surface Coating of Positive Electrode Plate]

The positive electrode plate may have a surface to which a material having a composition different from that of the positive electrode plate is adhered. As the material, the same material as the surface adhered material that may be adhered to the surface of the positive electrode active material is used.

### [2-3. Negative Electrode]

The negative electrode has a negative electrode active material on at least a part of a collector surface.

### [2-3-1. Negative Electrode Active Material]

The negative electrode active material used for the negative electrode is not particularly limited as long as it is capable of electrochemically absorbing and releasing metal ions. Specific examples thereof include (i) a carbon-based material, (ii) particles containing a metal capable of being alloyed with Li, (iii) a lithium-containing metal composite oxide material, and (iv) a mixture thereof. Among these, it is preferable to use (i) a carbon-based material, (ii) particles containing a metal capable of being alloyed with Li, and (v) a mixture of particles containing a metal capable of being alloyed with Li and graphite particles, from the viewpoint of good cycle properties and safety and excellent continuous charging properties.

These may be used alone or in combination of two or more thereof in an arbitrary ratio.

Identification and content measurement of the negative electrode active material are performed by ICP emission spectroscopy after a sample is alkali-melted.

### [2-3-1-1. Carbon-Based Material]

Examples of the (i) carbon-based material include natural graphite, artificial graphite, amorphous carbon, carbon-coated graphite, graphite-coated graphite, and resin-coated graphite. Among these, natural graphite is preferable. The carbon-based material may be used alone or in combination of two or more thereof in an arbitrary ratio.

Examples of the natural graphite include scaly graphite, flaky graphite, and/or graphite particles obtained by subjecting these graphite to a treatment, such as spheroidization or densification. Among these, spherical or ellipsoidal graphite particles that have been subjected to a spheroidizing treatment are preferable from the viewpoint of particle packing properties or charging and discharging rate properties.

The average particle diameter (d50) of the graphite particles is usually 1 µm or more and 100 µm or less.

### [2-3-1-2. Physical Properties of Carbon-Based Material]

The carbon-based material as the anode active material preferably satisfies at least one item, and more preferably satisfies a plurality of items at the same time, among characteristics, such as physical properties and shapes shown in the following (1) to (4).

### (1) X-ray Diffraction Prameter

The d value (interlayer spacing) of the lattice plane (002 plane) of a carbon-based material as determined by X-ray diffraction according to Gakushin-method is usually 0.335 nm or more and 0.360 nm or less. The crystallite size (Lc) of the carbon-based material as determined by X-ray diffraction according to Gakushin-method is 1.0 nm or more.

### (2) Volume-Based Average Particle Diameter

The volume-based average particle diameter of the carbon-based material is an average particle diameter (median diameter) on a volume basis obtained by a laser diffraction/scattering method, and is usually 1 µm or more and 100 µm or less.

### (3) Raman R Value, Raman Full Width at Half Maximum

The Raman R value of the carbon-based material is a value measured using an argon ion laser Raman spectrum method, and is usually 0.01 or more and 1.5 or less.

The Raman full width at half maximum near 1580 cm⁻¹ of the carbon-based material is not particularly limited, but is usually 10 cm⁻¹ or more and 100 cm⁻¹ or less.

### (4) BET Specific Surface Area

The BET specific surface area of the carbon-based material is a value of a specific surface area measured using a BET method, and is usually 0.1 m²·g⁻¹ or more and 100 m²·g⁻¹ or less.

The negative electrode active material may contain two or more kinds of carbon-based materials having different properties. The term "properties" as used herein refers to one or more characteristics selected from the group consisting of an X-ray diffraction parameter, a volume-based average particle diameter, a Raman R value, a Raman full width at half maximum, and a BET specific surface area.

Examples of containing two or more kinds of carbon-based materials having different properties include a case where the volume-based particle size distribution is not symmetrical about the median diameter, a case where two or more kinds of carbon-based materials having different Raman R values are contained, and a case where X-ray diffraction parameters are different.

### [2-3-1-3. Particles Containing Metal Capable of being Alloyed with Li]

As the (ii) particles containing a metal capable of being alloyed with Li, any conventionally known particles can be used, but from the viewpoint of capacity and cycle life, for example, particles of a metal selected from the group consisting of Sb, Si, Sn, Al, As, and Zn or particles of a compound thereof are preferable. When the particles containing a metal capable of being alloyed with Li contain two or more kinds of metals, the particles may be alloy particles made of an alloy of these metals.

Examples of the compound of a metal capable of being alloyed with Li include a metal oxide, a metal nitride, and a metal carbide. The compound may contain two or more kinds of metals capable of being alloyed with Li. Among these, metal Si (hereinafter, also referred to as "Si") or a Si-containing inorganic compound is preferable from the viewpoint of increasing the capacity.

In addition, the compound of a metal capable of being alloyed with Li may be already alloyed with Li at the time of the production of the negative electrode described later, and as the compound, Si or a Si-containing inorganic compound is preferable from the viewpoint of increasing the capacity.

In the present specification, Si or a Si-containing inorganic compound is collectively referred to as Si compound.

Examples of the Si compound include SiOₓ (0 ≤ x ≤ 2).

Examples of the metal compound alloyed with Li include Li_{y}Si (0 < y ≤ 4.4) and Li_{2z}SiO_{2+z} (0 < z ≤ 2). As the Si compound, a Si metal oxide (SiOₓ₁, 0 < x1 ≤ 2) is preferable from the viewpoint of larger theoretical capacity as compared with graphite, and amorphous Si or nano-sized Si crystal is preferable from the viewpoint that alkali ions, such as lithium ions can easily go in and out and high capacity can be obtained.

The average particle diameter (d₅₀) of the particles containing a metal capable of being alloyed with Li is usually 0.01 µm or more and 10 µm or less from the viewpoint of cycle life.

### [2-3-1-4. Mixture of Particles Containing Metal Capable of being Alloyed with Li and Graphite Particles]

The (v) mixture of particles containing a metal capable of being alloyed with Li and graphite particles may be a mixture in which the above-mentioned (ii) particles containing a metal capable of being alloyed with Li and the graphite particles are mixed in the state of independent particles, or may be a composite in which particles containing a metal capable of being alloyed with Li are present on the surface or in the inside of the graphite particles.

The content ratio of the particles containing a metal capable of being alloyed with Li is usually 1% by mass or more and 99% by mass or less with respect to the total amount of the particles containing a metal capable of being alloyed with Li and the graphite particles.

### [2-3-1-5. Lithium-Containing Metal Composite Oxide Material]

The (iii) lithium-containing metal composite oxide material is not particularly limited as long as it can absorb and release lithium ions. Specifically, from the viewpoint of high current density charging and discharging properties, a lithium-containing metal composite oxide material containing titanium is preferable, a composite oxide of lithium and titanium (hereinafter, also referred to as a "lithium-titanium composite oxide") is more preferable, and a lithium-titanium composite oxide having a spinel structure is still more preferable since the output resistance is significantly reduced.

In addition, lithium and/or titanium of the lithium-titanium composite oxide may be substituted with another metal element, for example, at least one element selected from the group consisting of Al, Ga, Cu, and Zn.

As the lithium-titanium composite oxide, Li_{4/3}Ti_{5/3}O₄, Li₁Ti₂O₄, and Li_{4/5}Ti_{11/5}O₄ are preferable. In addition, for example, Li_{4/3}Ti_{4/3}Al_{1/3}O₄ is also preferable as the lithium-titanium composite oxide in which a part of lithium and/or titanium is substituted with other elements.

### [2-3-2. Configuration and Production Method of Negative Electrode]

The negative electrode may be produced by any known method as long as the effects of the present invention are not impaired. For example, the negative electrode can be fabricated by adding a binder, a liquid medium, such as an aqueous solvent and an organic solvent, and if necessary, a thickener, an electroconductive material, and a filler to a negative electrode active material to form a slurry, applying the slurry to a collector, drying the slurry, and then pressing the dried slurry to form a negative electrode active material layer.

### [2-3-2-1. Content of Negative Electrode Active Material]

The content of the negative electrode active material in the negative electrode active material layer is usually 80% by mass or more and 99.5% by mass or less.

### [2-3-2-2. Electrode Density]

The negative electrode active material layer obtained by coating and drying is preferably compacted by a hand press or a roller press in order to increase the filling density of the negative electrode active material.

The electrode structure in a case where the negative electrode active material is made into an electrode is not particularly limited, but the density of the negative electrode active material layer present on the collector is usually 1 g·cm⁻³ or more and 2.2 g·cm⁻³ or less, preferably 1.2 g·cm⁻³ or more and 2.0 g·cm⁻³ or less, and more preferably 1.4 g·cm⁻³ or more and 1.8 g·cm⁻³ or less.

The density of the negative electrode active material layer is measured by measuring the thickness and the weight of the negative electrode active material layer.

### [2-3-2-3. Thickener]

The thickener is usually used for adjusting the viscosity of the slurry. The thickener is not particularly limited, and specific examples thereof include carboxymethyl cellulose, methyl cellulose, hydroxymethyl cellulose, ethyl cellulose, and polyvinyl alcohol. These may be used alone or in combination of two or more thereof in an arbitrary ratio.

When a thickener is used, the proportion of the thickener with respect to the negative electrode active material is usually 0.1% by mass or more and 5% by mass or less.

### [2-3-2-4. Binder]

The binder for binding the negative electrode active material is not particularly limited as long as it is a material stable to a nonaqueous electrolytic solution and a liquid medium used in the production of an electrode.

Specific examples thereof include a rubber-like polymer, such as SBR (styrene-butadiene rubber), isoprene rubber, butadiene rubber, fluororubber, NBR (acrylonitrilebutadiene rubber), and ethylene-propylene rubber; and a fluorine-based polymer, such as polyvinylidene fluoride, polytetrafluoroethylene, fluorinated polyvinylidene fluoride, and a tetrafluoroethylene-ethylene copolymer. These may be used alone or in combination of two or more thereof in an arbitrary ratio.

The proportion of the binder with respect to the negative electrode active material is usually 0.1% by mass or more and 20% by mass or less.

In particular, when the binder contains a rubber-like polymer represented by SBR as a main component, the proportion of the binder with respect to the negative electrode active material is usually 0.1% by mass or more and 5% by mass or less. In addition, when the binder contains a fluorine-based polymer represented by polyvinylidene fluoride as a main component, the proportion of the binder with respect to the negative electrode active material is usually 1% by mass or more and 15% by mass or less.

### [2-3-2-5. Collector]

As the collector for holding the negative electrode active material, any known collector can be used. Examples of the collector for the negative electrode include a metal material, such as aluminum, copper, nickel, stainless steel, and nickel-plated steel, and copper is particularly preferable from the viewpoint of ease of processing and cost.

Examples of the shape of the collector for the negative electrode include a metal foil, a metal cylinder, a metal coil, a metal plate, a metal thin film, an expanded metal, a punched metal, and a foamed metal. Among these, a metal foil or a metal thin film is preferable. Note that the metal thin film may be appropriately formed in a mesh shape.

In the case where the collector for the negative electrode has a plate shape or a film shape, the collector may have any desired thickness, but the thickness is usually 1 µm or more and 1 mm or less.

### [2-3-2-6. Thickness of Negative Electrode Plate]

The thickness of the negative electrode (negative electrode plate) is designed in accordance with the positive electrode (positive electrode plate) to be used, and is not particularly limited. The thickness of the negative electrode active material layer obtained by subtracting the thickness of the collector from the thickness of the negative electrode material is usually 15 µm or more and 300 µm or less.

### [2-3-2-7. Surface Coating of Negative Electrode Plate]

The above-mentioned negative electrode plate may have a surface to which a material having a composition different from that of the negative electrode active material is adhered (surface adhered material). Examples of the surface adhered material include an oxide, such as aluminum oxide, a sulfate, such as lithium sulfate, and a carbonate, such as lithium carbonate.

### [2-4. Separator]

A separator is usually interposed between the positive electrode and the negative electrode in order to prevent a short circuit. In this case, the nonaqueous electrolytic solution is usually used by being impregnated into the separator.

The material and shape of the separator are not particularly limited, and any known material and shape can be employed as long as the effects of the present invention are not impaired.

### [2-5. Battery Design]

### [2-5-1. Electrode Group]

The electrode group may have either a laminate structure in which the positive electrode plate and the negative electrode plate are laminated with the separator interposed therebetween, or a structure in which the positive electrode plate and the negative electrode plate are spirally wound with the separator interposed therebetween. The proportion of the volume of the electrode group to the internal volume of the battery (electrode group occupancy) is usually 40% or more and 90% or less.

### [2-5-2. Collecting Structure]

When the electrode group has the above-described laminate structure, a structure formed by bundling metal core portions of the respective electrode layers and welding the bundled metal core portions to a terminal is suitably used. A structure in which a plurality of terminals are provided in an electrode to reduce resistance is also suitably used. When the electrode group has the above-described wound structure, the internal resistance can be reduced by providing a plurality of lead structures for each of the positive electrode and the negative electrode and bundling the lead structures to the terminal.

### [2-5-3. Protection Element]

As the protection element, a PTC (Positive Temperature Coefficient) element whose resistance increases with heat generation due to an excessive current, a temperature fuse, a thermistor, a valve (current cut-off valve) that cuts off a current flowing through a circuit due to a rapid increase in internal pressure or internal temperature of the battery at the time of abnormal heat generation can be used. As the protection element, a protection element having a condition that does not operate in normal use at a high current is preferably selected, and a design that does not lead to abnormal heat generation or thermal runaway even without the protection element is more preferable.

### [2-5-4. Outer Packaging Body]

Nonaqueous electrolytic solution batteries are usually configured by housing the nonaqueous electrolytic solution of the present invention, a negative electrode, a positive electrode, and separators in an outer packaging body (outer packaging case). The outer packaging body is not limited, and any known outer packaging body can be adopted as long as the effects of the present invention are not impaired.

The material of the outer packaging case is not particularly limited as long as it is stable to the nonaqueous electrolytic solution to be used, but from the viewpoint of weight reduction and cost, a metal, such as steel, aluminum, and an aluminum alloy, or a laminated film is preferably used. In particular, steel is preferable from the viewpoint of pressure resistance for operating the current cut-off valve.

Examples of the outer packaging case using the above-mentioned metals include an outer packaging case having a sealed structure in which metals are welded to each other by laser welding, resistance welding, or ultrasonic welding, and an outer packaging case having a caulking structure in which the above-mentioned metals are used via a resin gasket.

### [2-5-5. Shape]

In addition, the shape of the outer packaging case is also arbitrary, and may be, for example, any of a cylinder-type shape, a prismatic shape, a laminate-type shape, a coin-type shape, and a large-sized shape. In particular, a cylinder-type is most preferable from the viewpoint of attaching the current cut-off valve.

### Examples

Hereinafter, the present invention will be described more specifically with reference to Examples and Comparative Examples, but the present invention is not limited to these Examples.

### <Example 1>

### [Preparation of Nonaqueous Electrolytic Solution]

Under a dry argon atmosphere, a reference electrolytic solution was prepared by dissolving sufficiently dried LiPF₆ as an electrolyte at a concentration of 1.0 mol/L in a mixed solvent composed of ethylene carbonate, ethyl methyl carbonate, and dimethyl carbonate (mixing volume ratio: 30:30:40), and further adding monofluoroethylene carbonate as an auxiliary agent so as to be in an amount of 1.0% by mass with respect to an entire electrolytic solution.

Further, 0.4% by mass of 2-propynyl methyl carbonate and 1.0% by mass of lithium fluorosulfonate (LiFSO₃) were added to the reference electrolytic solution to prepare a nonaqueous electrolytic solution.

### [Fabrication of Positive Electrode]

97 parts by mass of a nickel-containing transition metal oxide (LiNi_{0.91}Co_{0.06}Mn_{0.03}O₂) as a positive electrode active material, 1.5 parts by mass of acetylene black as an electroconductive material, and 1.5 parts by mass of polyvinylidene fluoride as a binder were mixed with a disperser in a N-methylpyrrolidone solvent to form a slurry. This was uniformly applied to both surfaces of an aluminum foil having a thickness of 21 µm, dried, and then pressed so as to have a density of 3.3 g/cm³ to obtain a positive electrode.

### [Fabrication of Negative Electrode]

Natural graphite powder as a negative electrode active material, an aqueous dispersion of sodium carboxymethyl cellulose (concentration of sodium carboxymethyl cellulose: 1% by mass) as a thickener, and an aqueous dispersion of styrene-butadiene rubber (concentration of styrene-butadiene rubber: 50% by mass) as a binder were mixed with a disperser to form a slurry. This slurry was uniformly applied to one surface of a copper foil having a thickness of 12 µm, dried, and then pressed so as to have a density of 1.5 g/cm³ to obtain a negative electrode. The negative electrode was fabricated so that the mass ratio of (natural graphite):(sodium carboxymethyl cellulose):(styrene-butadiene rubber) in the dried negative electrode was 98:1:1.

### [Production of Nonaqueous Electrolytic Solution Battery (Pouch-Type)]

The above-described positive electrode, negative electrode, and a polypropylene separator were laminated in the order of the negative electrode, the separator, and the positive electrode to produce a battery element.

The battery element was inserted into a bag made of a laminate film in which both surfaces of aluminum (40 µm thick) were coated with resin layers so that terminals of the positive electrode and the negative electrode protruded, and then the nonaqueous electrolytic solution obtained above was injected into the bag and vacuum-sealed to produce a pouch-type battery as a nonaqueous electrolytic solution battery.

### <Examples 2 to 5>

Nonaqueous electrolytic solution batteries were produced in the same manner as in Example 1, except that the conditions were changed to those shown in Table 1.

### <Example 6>

A nonaqueous electrolytic solution battery was prepared in the same manner as in Example 1 except that a mixed solvent composed of ethylene carbonate, ethyl methyl carbonate, and methyl acetate (volume ratio: 30:50:20) was used as the nonaqueous solvent in Example 1.

### <Comparative Examples 1 to 10>

Nonaqueous electrolytic solution batteries were produced in the same manner as in Example 1, except that the conditions were changed to those shown in Table 1.

As an auxiliary agent, 3.0% by mass of vinylene carbonate (VC) was added in Comparative Example 6, 3.0% by mass of lithium bisfluorosulfonylimide (LiFSI) was added in Comparative Example 7, 1.0% by mass of lithium difluorophosphate (LiPO₂F₂) was added in Comparative Example 8, 0.4% by mass of dipropynyl carbonate (DPC) was added in Comparative Example 9, and 0.4% by mass of ethynyl ethylene carbonate (EEC) was added in Comparative Example 10.

### <Evaluation of Nonaqueous Electrolytic Solution Battery>

### [Pre-Test Charging and Discharging and Discharge Power Capacity]

Each of the nonaqueous electrolytic solution batteries obtained in Examples and Comparative Examples was charged for 4 hours at a constant current corresponding to 0.05 C at 25°C and discharged to 2.5 V at a constant current of 0.2 C in a state of being sandwiched between glass plates in order to increase adhesion between electrodes. Here, 1 C represents a current value at which the reference capacity of the battery is discharged in one hour, 0.5 C represents a current value that is one half of 1 C, and 0.2 C represents a current value that is one fifth of 1 C.

Next, the battery was charged to 4.1 V at a constant current corresponding to 0.1 C, discharged to 2.5 V at a constant current of 0.2 C, further constant-voltage and constant-current charged to 4.1 V at 0.2 C (0.05 C cut), and then discharged to 2.5 V at a constant current of 0.2 C. Thereafter, the battery was constant-current and constant-voltage charged to 4.2 V at 0.2 C (0.05 C cut), and then discharged to 2.5 V at a constant current of 0.2 C. Thereafter, the battery was constant-current and constant-voltage charged to 4.2 V at 0.2 C (0.05 C cut), and then discharged to 2.5 V at a constant current of 1.0 C.

The power capacity at the time of 1.0 C discharging at this time was taken as the discharge power capacity. The results are shown in Table 1.

In Table 1, the discharge power capacity is expressed as a relative value normalized by setting the discharge power capacity of Comparative Example 1 to 100.

Thereafter, the battery was constant-current and constant-voltage charged to 4.2 V at 0.2 C (0.05 C cut).

### [Malfunction Suppression Rate of Battery Current Cut-off Valve]

The amount of gas generated during overcharging and the amount of gas generated during high-temperature continuous charging were measured by the following method, and the difference between the two was taken as the malfunction suppression rate of the battery current cut-off valve. The results are shown in Table 1.

In Table 1, the malfunction suppression rate of the battery current cut-off valve is expressed as a relative value normalized by setting the malfunction suppression rate of the battery current cut-off valve of Comparative Example 1 to 100.

### (Measurement of Amount of Gas Generated during Overcharging)

The volume of each of the nonaqueous electrolytic solution batteries after completion of pre-test charging and discharging was measured using the Archimedes principle. Thereafter, in a state of being sandwiched between the glass plates again, the battery was charged to 5.0 V at a constant current corresponding to 0.5 C at 45°C. The glass plates were then removed and the volume of each nonaqueous electrolytic solution battery was measured using the Archimedes principle. The change in volume before and after the test was taken as the amount of gas generated during overcharging.

### (Measurement of Amount of Gas Generated during High-Temperature Continuous Charging)

The volume of each of the nonaqueous electrolytic solution batteries after completion of pre-test charging and discharging was measured using the Archimedes principle. Thereafter, in a state of being sandwiched between the glass plates again, the battery was constant-current and constant-voltage charged (cut for 72 hours) to 4.25 V at 0.2 C at 45°C. The glass plates were then removed and the volume of each nonaqueous electrolytic solution battery was measured using the Archimedes principle. The change in volume before and after the test was taken as the amount of gas generated during high-temperature continuous charging.

**Table 1**

| | Compound (A) | | Anion (B) | | Auxiliary agent | | Charge and discharge test results | |
|---|---|---|---|---|---|---|---|---|
| | Kind | Content | Kind | Content | Kind | Content | Discharge power capacity | Malfunction suppression rate of current cut-off valve |
| | | (% by mass) | | (% by mass) | | (% by mass) | | |
| Example 1 | 2-propynyl methyl carbonate | 0.4 | LiFSO₃ | 1.0 | - | - | 100.30 | 106.9 |
| Example 2 | 2-propynyl methyl carbonate | 0.1 | LiFSO₃ | 1.0 | - | - | 100.19 | 104.9 |
| Example 3 | 2-propynyl methyl carbonate | 0.4 | LiFSO₃ | 0.4 | - | - | 100.37 | 104.9 |
| Example 4 | 2-propynyl methyl carbonate | 0.4 | LiCH₃SO₄ | 1.0 | - | - | 100.32 | 103.9 |
| Example 5 | 2-propynyl methyl carbonate | 0.4 | LiC₂H₅SO₄ | 1.0 | - | - | 100.34 | 103.0 |
| Example 6 | 2-propynyl methyl carbonate | 0.4 | LiFSO₃ | 1.0 | - | - | 100.32 | 109.1 |
| Comparative Example 1 | - | - | - | - | - | - | 100.0 | 100.0 |
| Comparative Example 2 | 2-propynyl methyl carbonate | 0.4 | - | - | - | - | 81.2 | 100.0 |
| Comparative Example 3 | - | - | LiFSO₃ | 1.0 | - | - | 99.9 | 98.0 |
| Comparative Example 4 | - | - | LiC₂H₅SO₄ | 1.0 | - | - | 81.5 | 92.8 |
| Comparative Example 5 | 2-propynyl methyl carbonate | 1.6 | LiFSO₃ | 1.2 | - | - | 98.7 | 97.0 |
| Comparative Example 6 | 2-propynyl methyl carbonate | 1.0 | - | - | VC | 3.0 | 99.4 | 99.0 |
| Comparative Example 7 | 2-propynyl methyl carbonate | 0.4 | - | - | LiFSI | 3.0 | 80.2 | 100.2 |
| Comparative Example 8 | 2-propynyl methyl carbonate | 0.4 | - | - | LiPO₂F₂ | 1.0 | 99.6 | 99.0 |
| Comparative Example 9 | - | - | LiFSO₃ | 1.0 | DPC | 0.4 | 78.2 | 100.2 |
| Comparative Example 10 | - | - | LiFSO₃ | 1.0 | EEC | 0.4 | 84.4 | 100.1 |

From Table 1, it was found that the nonaqueous electrolytic solution batteries of Examples 1 to 6, each including an electrolytic solution containing a compound (A) represented by the general formula (1) and an anion (B) represented by the general formula (2) and having a mass ratio [(A)/(B)] of 0.01 or more and 1.2 or less, were improved in discharge power capacity and malfunction suppression rate of the current cut-off valve, as compared with the nonaqueous electrolytic solution battery of Comparative Example 1 including an electrolytic solution not containing the compound (A) and the anion (B), the nonaqueous electrolytic solution batteries of Comparative Examples 2 to 4 each including an electrolytic solution not containing the compound (A) or the anion (B), and the nonaqueous electrolytic solution battery of Comparative Example 5 including an electrolytic solution containing the compound (A) and the anion (B) but not satisfying the predetermined mass ratio [(A)/(B)]. That is, a synergistic effect by the compound (A), the compound (B), and satisfying the predetermined mass ratio [(A)/(B)] could be confirmed. In addition, the nonaqueous electrolytic solution batteries of Examples 1 to 6 were improved in discharge power capacity and malfunction suppression rate of the current cut-off valve, as compared with the nonaqueous electrolytic solution battery of Comparative Example 6 including an electrolytic solution containing vinylene carbonate instead of the anion (B), the nonaqueous electrolytic solution battery of Comparative Example 7 including an electrolytic solution containing bisfluorosulfonylimide anion instead of the anion (B), the nonaqueous electrolytic solution battery of Comparative Example 8 including an electrolytic solution containing difluorophosphate anion instead of the anion (B), the nonaqueous electrolytic solution battery of Comparative Example 9 including an electrolytic solution containing dipropynyl carbonate instead of the compound (A), and the nonaqueous electrolytic solution battery of Comparative Example 10 including an electrolytic solution containing ethynyl ethylene carbonate instead of the compound (A). That is, it can be seen that the effects of the present application are exhibited by containing a combination of the compound (A) and the anion (B) among the triple bond-containing compounds and anions used in the related art.

### Industrial Applicability

By using the nonaqueous electrolytic solution of the present invention as an electrolytic solution of a nonaqueous electrolytic solution battery, it is possible to suppress malfunction of the current cut-off valve in a normal use state and improve discharge power capacity. Therefore, the nonaqueous electrolytic solution of the present invention can be suitably used in all fields, such as electronic devices in which the nonaqueous electrolytic solution battery is used. Specific examples of applications of the nonaqueous electrolytic solution secondary battery of the present invention include a laptop computer, a pen input personal computer, a mobile personal computer, an electronic book player, a cellular phone, a portable fax machine, a portable copy machine, a portable printer, a portable audio player, a small video camera, a headphone stereo, a video movie, an liquid crystal television, a handy cleaner, a portable CD, a mini disc, a transceiver, an electronic notebook, a calculator, a memory card, a portable tape recorder, a radio, a backup power source, a motor, an automobile, a motorcycle, a motorized bicycle, a bicycle, a lighting device, a toy, a game machine, a watch, an electric tool, a strobe, a camera, a household backup power source, a backup power source for business offices, a power source for load leveling, and a renewable energy storage power source.

## Claims

1. A nonaqueous electrolytic solution comprising a compound (A) represented by the following general formula (1) and an anion (B) represented by the following general formula (2), wherein a mass ratio [(A)/(B)] of a content of the compound (A) to a content of the anion (B) is 0.01 or more and 1.2 or less: 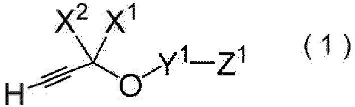 wherein X¹ and X² each independently represent a hydrogen atom or an aliphatic hydrocarbon group having 1 or more and 3 or less carbon atoms which may be substituted with a halogen atom; Y¹ is a divalent atomic group selected from the structure group represented by the following formula (1-1); and Z¹ represents an alkyl group having 1 or more and 5 or less carbon atoms, an alkenyl group having 2 or more and 5 or less carbon atoms, or a monovalent substituent represented by the following formula (1-3): 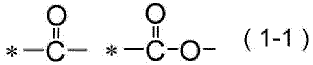 wherein * represents a bonding site to an oxygen atom in the formula (1): 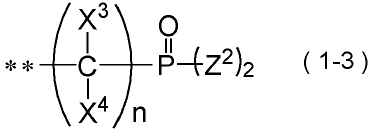 wherein Z² represents an alkyl group or an alkoxy group each having 1 or more and 3 or less carbon atoms which may be substituted with a halogen atom, or an alkoxyalkyl group having 2 or more and 4 or less carbon atoms which may be substituted with a halogen atom; X³ and X⁴ each independently represent a hydrogen atom or a halogen atom; n represents an integer of 1 or more and 5 or less; and ** represents a bonding site to Y¹ in the formula (1): 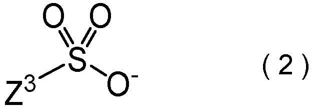 wherein Z³ represents a fluorine atom, an alkyl group or an alkoxy group each having 1 or more and 4 or less carbon atoms which may be substituted with a halogen atom, or an alkenyl group or alkenyloxy group having 2 or more and 4 or less carbon atoms which may be substituted with a halogen atom.

2. The nonaqueous electrolytic solution according to claim 1, wherein Y¹ in the general formula (1) is a divalent atomic group represented by the following formula (1-2): 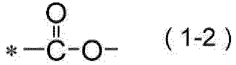 wherein * represents a bonding site to an oxygen atom in the formula (1).

3. The nonaqueous electrolytic solution according to claim 1 or 2, wherein Z³ in the general formula (2) is a fluorine atom.

4. The nonaqueous electrolytic solution according to any one of claims 1 to 3, further comprising a linear carboxylate.

5. The nonaqueous electrolytic solution according to claim 1, wherein Y¹ in the general formula (1) is a divalent atomic group represented by the following formula: 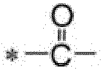 in which * represents a bonding site to an oxygen atom in formula (1).

6. The nonaqueous electrolytic solution according to any one of claims 1 to 5, wherein Z¹ represents an alkyl group having 1 or more and 3 or less carbon atoms, or an alkenyl group having 2 or 3 carbon atoms.

7. The nonaqueous electrolytic solution according to claim 6, wherein Y¹ is a divalent atomic group selected from the structure group represented by the following formula (1-2): 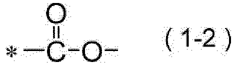 in which * represents a bonding site to an oxygen atom in formula (1).

8. The nonaqueous electrolytic solution according to any one of claims 1 to 7, wherein Z³ represents a fluorine atom or an alkoxy group having 1 or more and 4 or less carbon atoms.

9. The nonaqueous electrolytic solution according to any one of claims 1 to 8, wherein the counterion to the anion (B) represented by the general formula (2) is an alkali metal cation.

10. The nonaqueous electrolytic solution according to any one of claims 1 to 9, further comprising organic solvent selected from a combination of a saturated cyclic carbonate and a linear carbonate; and a combination of a saturated cyclic carbonate, a linear carbonate, and a linear carboxylate.

11. A nonaqueous electrolytic solution battery comprising: a positive electrode having a positive electrode active material capable of absorbing and releasing lithium ions; a negative electrode; and the nonaqueous electrolytic solution according to any one of claims 1 to 10.

12. The nonaqueous electrolytic solution battery according to claim 11, wherein the positive electrode comprises a lithium transition metal composite oxide represented by the following general formula (13) as a positive electrode active material:
Liₐ₁Ni_{b1}M_{c1}O₂ (13)
wherein a1, b1, and c1 satisfy 0.90 ≤ a1 ≤ 1.10, 0.65 ≤ b1 ≤ 0.98, and 0 ≤ c1 ≤ 0.20, respectively, and b1 + c1 = 1; and M represents at least one element selected from the group consisting of Co, Mn, Al, Mg, Zr, Fe, Ti, and Er.

13. The nonaqueous electrolytic solution battery according to claim 12, wherein, in the general formula (13), b1 satisfies 0.90 ≤ b1 ≤ 0.98.

## Patentansprüche

1. Nichtwässrige Elektrolytlösung, die eine Verbindung (A) mit der folgenden allgemeinen Formel (1) und ein Anion (B) mit der folgenden allgemeinen Formel (2) umfasst, wobei ein Massenverhältnis [(A)/(B)] eines Gehalts der Verbindung (A) zu einem Gehalt des Anions (B) 0,01 oder mehr und 1,2 oder weniger beträgt: 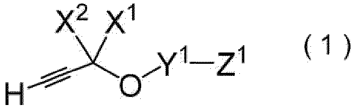 worin X¹ und X² jeweils unabhängig ein Wasserstoffatom oder eine aliphatische Kohlenwasserstoffgruppe mit 1 oder mehr und 3 oder weniger Kohlenstoffatomen, welche mit einem Halogenatom substituiert sein können, darstellen; Y¹ eine divalente atomare Gruppe ist, ausgewählt aus der Strukturgruppe mit der folgenden Formel (1-1); und Z¹ eine Alkylgruppe mit 1 oder mehr und 5 oder weniger Kohlenstoffatomen, eine Alkenylgruppe mit 2 oder mehr und 5 oder weniger Kohlenstoffatomen oder einen einwertigen Substituenten mit der folgenden Formel (1-3) darstellt: 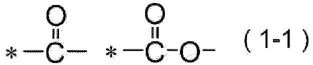 worin * eine Bindungsstelle an ein Sauerstoffatom in der Formel (1) darstellt: 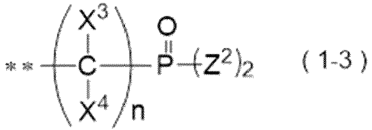 worin Z² eine Alkylgruppe oder eine Alkoxygruppe mit jeweils 1 oder mehr und 3 oder weniger Kohlenstoffatomen, welche mit einem Halogenatom substituiert sein können, oder eine Alkoxyalkylgruppe mit 2 oder mehr und 4 oder weniger Kohlenstoffatomen, welche mit einem Halogenatom substituiert sein kann, darstellt; X³ und X⁴ jeweils unabhängig ein Wasserstoffatom oder ein Halogenatom darestellen; n eine ganze Zahl von 1 oder mehr und 5 oder weniger darstellt; und ** eine Bindungsstelle an Y¹ in der Formel (1) darstellt: 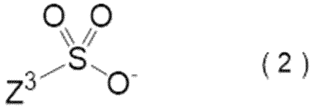 worin Z³ ein Fluoratom, eine Alkylgruppe oder eine Alkoxygruppe mit jeweils 1 oder mehr und 4 oder weniger Kohlenstoffatomen, welche mit einem Halogenatom substituiert sein können, oder eine Alkenylgruppe oder Alkenyloxygruppe mit 2 oder mehr und 4 oder weniger Kohlenstoffatomen, welche mit einem Halogenatom substituiert sein können, darstellt.

2. Nichtwässrige Elektrolytlösung gemäß Anspruch 1, wobei Y¹ in der allgemeinen Formel (1) eine divalent atomare Gruppe mit der folgenden Formel (1-2) ist: 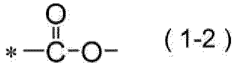 worin * eine Bindungsstelle an ein Sauerstoffatom in der Formel (1) darstellt.

3. Nichtwässrige Elektrolytlösung gemäß Anspruch 1 oder 2, wobei Z³ in der allgemeinen Formel (2) ein Fluoratom ist.

4. Nichtwässrige Elektrolytlösung gemäß mindestens einem der Ansprüche 1 bis 3, die ferner ein lineares Carboxylat umfasst.

5. Nichtwässrige Elektrolytlösung gemäß Anspruch 1, wobei Y¹ in der allgemeinen Formel (1) eine divalent-atomare Gruppe mit der folgenden Formel ist: 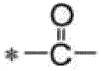 worin * eine Bindungsstelle an ein Sauerstoffatom in Formel (1) darstellt.

6. Nichtwässrige Elektrolytlösung gemäß mindestens einem der Ansprüche 1 bis 5, wobei Z¹ eine Alkylgruppe mit 1 oder mehr und 3 oder weniger Kohlenstoffatomen oder eine Alkenylgruppe mit 2 oder 3 Kohlenstoffatomen darstellt.

7. Nichtwässrige Elektrolytlösung nach Anspruch 6, wobei Y¹ eine divalent-atomare Gruppe ist, ausgewählt aus der Strukturgruppe mit der folgenden Formel (1-2): 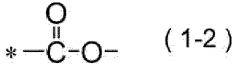 worin * eine Bindungsstelle an ein Sauerstoffatom in Formel (1) darstellt.

8. Nichtwässrige Elektrolytlösung gemäß mindestens einem der Ansprüche 1 bis 7, wobei Z³ ein Fluoratom oder eine Alkoxygruppe mit 1 oder mehr und 4 oder weniger Kohlenstoffatomen darstellt.

9. Nichtwässrige Elektrolytlösung gemäß mindestens einem der Ansprüche 1 bis 8, wobei das Gegenion zum Anion (B) mit der allgemeinen Formel (2) ein Alkalimetallkation ist.

10. Nichtwässrige Elektrolytlösung gemäß mindestens einem der Ansprüche 1 bis 9, die ferner ein organisches Lösungsmittel umfasst, das aus einer Kombination aus einem gesättigten cyclischen Carbonat und einem linearen Carbonat; und aus einer Kombination aus einem gesättigten cyclischen Carbonat, einem linearen Carbonat und einem linearen Carboxylat ausgewählt ist.

11. Batterie mit nichtwässriger Elektrolytlösung, umfassend:
eine positive Elektrode mit einem Positivelektrodenaktivmaterial, das Lithiumionen aufnehmen und freisetzen kann; eine negative Elektrode; und die nichtwässrige Elektrolytlösung gemäß mindestens einem der Ansprüche 1 bis 10.

12. Batterie mit nichtwässriger Elektrolytlösung gemäß Anspruch 11, wobei die positive Elektrode ein Lithium-Übergangsmetall-Verbundoxid mit der folgenden allgemeinen Formel (13) als Positivelektrodenaktivmaterial umfasst:
Liₐ₁Ni_{b1}M_{c1}O₂ (13)
worin a1, b1 und c1 jeweils die Bedingungen 0,90 ≤ a1 ≤ 1,10, 0,65 ≤ b1 ≤ 0,98 und 0 ≤ c1 ≤ 0,20 erfüllen und b1 + c1 = 1 gilt; und M mindestens ein Element, ausgewählt ist aus der Gruppe bestehend aus Co, Mn, Al, Mg, Zr, Fe, Ti und Er, darstellt.

13. Batterie mit nichtwässriger Elektrolytlösung gemäß Anspruch 12, wobei in der allgemeinen Formel (13) für b1 gilt: 0,90 ≤ b1 ≤ 0,98.

## Revendications

1. Solution électrolytique non aqueuse comprenant un composé (A) représenté par la formule générale (1) suivante et un anion (B) représenté par la formule générale (2) suivante, dans laquelle un rapport massique [(A)/(B)] d'une teneur du composé (A) à une teneur de l'anion (B) est 0,01 ou plus et 1,2 ou moins : 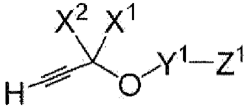 dans laquelle X¹ et X² représentent chacun indépendamment un atome d'hydrogène ou un groupe hydrocarboné aliphatique présentant 1 ou plus et 3 ou moins atomes de carbone qui peut être substitué par un atome d'halogène ; Y¹ est un groupe atomique divalent sélectionné dans le groupe de structure représenté par la formule (1-1) suivante ; et Z¹ représente un groupe alkyle présentant 1 ou plus et 5 ou moins atomes de carbone, un groupe alcényle présentant 2 ou plus et 5 ou moins atomes de carbone, ou un substituant monovalent représenté par la formule (1-3) suivante : 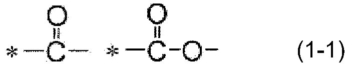 dans laquelle * représente un site de liaison à un atome d'oxygène dans la formule (1) : 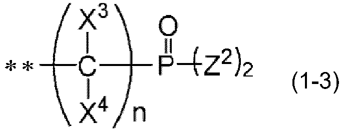 dans laquelle Z² représente un groupe alkyle ou un groupe alcoxy présentant chacun 1 ou plus et 3 ou moins atomes de carbone qui peut être substitué par un atome d'halogène, ou un groupe alcoxyalkyle présentant 2 ou plus et 4 ou moins atomes de carbone qui peut être substitué par un atome d'halogène ; X³ et X⁴ représentent chacun indépendamment un atome d'hydrogène ou un atome d'halogène ; n représente un nombre entier de 1 ou plus et 5 ou moins ; et ** représente un site de liaison à Y¹ dans la formule (1) : 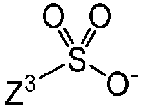 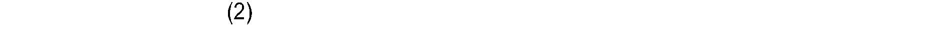 dans laquelle Z³ représente un atome de fluor, un groupe alkyle ou un groupe alcoxy présentant chacun 1 ou plus et 4 ou moins atomes de carbone qui peut être substitué par un atome d'halogène, ou un groupe alcényle ou un groupe alcényloxy présentant 2 ou plus et 4 ou moins atomes de carbone qui peut être substitué par un atome d'halogène.

2. Solution électrolytique non aqueuse selon la revendication 1, dans laquelle Y¹ dans la formule générale (1) est un groupe atomique divalent représenté par la formule (1-2) suivante : 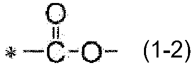 dans laquelle * représente un site de liaison à un atome d'oxygène dans la formule (1).

3. Solution électrolytique non aqueuse selon la revendication 1 ou la revendication 2, dans laquelle Z³ dans la formule générale (2) est un atome de fluor.

4. Solution électrolytique non aqueuse selon l'une quelconque des revendications 1 à 3, comprenant en outre un carboxylate linéaire.

5. Solution électrolytique non aqueuse selon la revendication 1, dans laquelle Y¹ dans la formule générale (1) est un groupe atomique divalent représenté par la formule suivante : 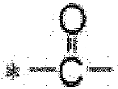 dans laquelle * représente un site de liaison à un atome d'oxygène dans la formule (1).

6. Solution électrolytique non aqueuse selon l'une quelconque des revendications 1 à 5, dans laquelle Z¹ représente un groupe alkyle présentant 1 ou plus et 3 ou moins atomes de carbone, ou un groupe alcényle présentant 2 ou 3 atomes de carbone.

7. Solution électrolytique non aqueuse selon la revendication 6, dans laquelle Y¹ est un groupe atomique divalent sélectionné dans le groupe de structure représenté par la formule (1-2) suivante : 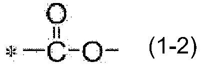 dans laquelle * représente un site de liaison à un atome d'oxygène dans la formule (1).

8. Solution électrolytique non aqueuse selon l'une quelconque des revendications 1 à 7, dans laquelle Z³ représente un atome de fluor ou un groupe alcoxy présentant 1 ou plus et 4 ou moins atomes de carbone.

9. Solution électrolytique non aqueuse selon l'une quelconque des revendications 1 à 8, dans laquelle le contre-ion à l'anion (B) représenté par la formule générale (2) est un cation de métal alcalin.

10. Solution électrolytique non aqueuse selon l'une quelconque des revendications 1 à 9, comprenant en outre un solvant organique sélectionné dans une combinaison d'un carbonate cyclique saturé et d'un carbonate linéaire ; et une combinaison d'un carbonate cyclique saturé, d'un carbonate linéaire et d'un carboxylate linéaire.

11. Batterie à solution électrolytique non aqueuse comprenant : une électrode positive présentant un matériau actif d'électrode positive capable d'absorber et de libérer des ions lithium ; une électrode négative ; et la solution électrolytique non aqueuse selon l'une quelconque des revendications 1 à 10.

12. Batterie à solution électrolytique non aqueuse selon la revendication 11, dans laquelle l'électrode positive comprend un oxyde composite de métal de transition de lithium représenté par la formule générale (13) suivante en tant que matériau actif d'électrode positive :
Liₐ₁Ni_{b1}Mc₁O₂ (13)
dans laquelle a1, b1 et c1 satisfont à 0,90 ≤ a1 ≤ 1,10, 0,65 ≤ b1 ≤ 0,98 et 0 ≤ c1 ≤ 0,20, respectivement, et b1 + c1 = 1 ; et M représente au moins un élément sélectionné dans le groupe consistant en Co, Mn, Al, Mg, Zr, Fe, Ti et Er.

13. Batterie à solution électrolytique non aqueuse selon la revendication 12, dans laquelle, dans la formule générale (13), b1 satisfait à 0,90 ≤ b1 ≤ 0,98.
